(19) Europäisches Patentamt
European Patent Office
Office européen des brevets

(11) **EP 3 859 406 A1**

(12) **EUROPEAN PATENT APPLICATION**

(43) Date of publication:
**04.08.2021 Bulletin 2021/31**

(51) Int Cl.:
**G01V 7/04** (2006.01)       **G01V 7/00** (2006.01)
**G01V 7/02** (2006.01)

(21) Application number: **20209601.2**

(22) Date of filing: **21.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(62) Document number(s) of the earlier application(s) in accordance with Art. 76 EPC:
**19175691.5 / 3 742 204**

(71) Applicant: **Sensonica Limited**
**2406 Nicosia (CY)**

(72) Inventors:
• **MARGARITOVA, Oxana**
**25088 TOSCOLANO-MADERNO (IT)**
• **KHODKIN, Andrey**
**125367 MOSCOW (RU)**

(74) Representative: **Samson & Partner Patentanwälte mbB**
**Widenmayerstraße 6**
**80538 München (DE)**

Remarks:
This application was filed on 24-11-2020 as a divisional application to the application mentioned under INID code 62.

(54) **APPARATUS, SYSTEM AND METHOD TO CONTROLLABLY INFLUENCE AT LEAST ONE OF A RATE OF A CHEMICAL REACTION, A BIOLOGICAL PROCESS AND/OR PHASE TRANSITION PROCESSES**

(57)     The present disclosure provides an apparatus, a system and methods to influence a rate of at least one chemical reaction and/or a biological process and/or a phase transition process. The apparatus may include a computing device, a EM source assembly configured to provide electromagnetic radiation, a magnetic assembly configured to provide a magnetic field in a signal-generation region, and a guiding device coupled to the EM source assembly. The guiding device may be configured to guide the electromagnetic radiation provided by the EM source assembly along a guiding direction and into the signal-generation region, wherein the magnetic field in the signal-generation region may be perpendicular to the guiding direction of the guiding device. The apparatus may further include a focus area for outputting a gravitational radiation generated in the signal-generation region when the electromagnetic radiation of the EM source assembly interacts with the magnetic field provided by the magnet assembly. The focus area may be directed to at least partially cover the at least one chemical reaction and/or the biological process and/or the phase transition process. A control sample including the same at least one chemical reaction and/or biological process and/or phase transition process may be arranged outside the focus area and may be used for comparison with the probe to determine an influence thereon.

Fig. 1

**Description**

**FIELD OF THE INVENTION**

Embodiments described herein relate to an apparatus, systems and methods to controllably influence at least one of a rate of a chemical reaction, a biological process and/or a phase transition process, and particularly to change the rate of the at least one chemical reaction, the biological process and/or the phase transition process.

**BACKGROUND**

In conventional methods, chemical reactions are influenced, e.g. by decreasing the activation energy $E_a$ of the reaction using, for example, catalysts. Other ways include changing the temperature T, the pressure P and/or the concentration.

However, not every reaction has acceptable catalysts. Each individual reaction also requires, e.g., an individual selection of catalysts. Furthermore, reactions with highly pure substances do not allow using catalysts at all.

Phase transition processes are often found in nature and widely used to produce materials in different areas of science and industry, for example metallurgy, pharmaceutics, electronics, food production etc.

Controlling/influencing a phase transition process, e.g. the parameters thereof, such as, e.g. a phase ratio or nucleation conditions, allows to change desired properties of the final product.

However, there are technological limitations on, e.g., how such a phase transition process may be controlled/influenced.

**SUMMARY**

In light of the above, an apparatus, systems as well as methods to controllably influence at least one of a rate of a chemical reaction, a biological process and/or a phase transition process is provided.

Further aspects, advantages, and features are apparent from the dependent claims, the description, and the accompanying drawings.

The present invention provides apparatus, system and method subject-matter according to the accompanying independent claims, wherein variations, embodiments and examples thereof are defined in accompanying dependent claims.

An apparatus to influence at least one of a rate of a chemical reaction, and/or a biological process and/or a phase transition process is provided, the apparatus comprises:

a computing device,
an electromagnetic (EM) radiation source assembly configured to provide electromagnetic radiation,
a magnetic assembly configured to provide a magnetic field in a signal-generation region,
a guiding device coupled to the EM source assembly,
the guiding device being configured to guide the electromagnetic radiation provided by the EM source assembly along a guiding direction and into the signal-generation region,
wherein the magnetic field in the signal-generation region being perpendicular to the guiding direction of the guiding device, and
a focus area for outputting gravitational radiation generated in the signal-generation region when the electromagnetic radiation of the EM source assembly interacts with the magnetic field provided by the magnet assembly,
the focus area being directed to at least partially cover the at least one chemical reaction, and/or the biological process and/or the phase transition process.

Throughout the present disclosure a "chemical reaction" may be understood as a process leading to a chemical transformation of one set of chemical substances to another. This may also include organic reactions.

For a chemical reaction, not only the substances (e.g. initial reactants, intermediate products and/or out coming products) involved are of interest, but also the (initial and/or final) chemical concentration as well as the reaction rate (e.g. speed at which the reaction occurs), the Temperature T at which the reaction occurs, the pressure P, as well as the energy E, or the energy direction (e.g. flow direction) of the reaction, including also equilibrium cases. All these parameters may be used to describe or characterize a chemical reaction and changing these parameters may result in changing the chemical reaction, e.g. and/or sub-/intermediate steps thereof.

Throughout the present disclosure a "phase transition process" may be understood as a process leading to a change or transition from one, e.g. thermodynamic, state or phase such as solid, liquid, gas or plasma to another. Such transitions may be affected by parameters such as temperature T, Volume V and/or pressure P or external parameters, such as for example, phases, phase ratio, diffusion, nucleation conditions, non-ionizing radiation that may result in changed properties of, e.g. matter after the transition. These transitions may include transitions from gas to plasma or vice versa (e.g. recombination, ionization), from gas to liquid or vice versa (e.g. vaporization, condensation), form gas to solid or vice versa (e.g. deposition, sublimation), from solid to liquid or vice versa (e.g. freezing, melting) etc.

For example, (mineral) crystal formation, e.g. a process of forming of a crystalline structure from a solution (liquid), may be regarded as a phase transition process since a solution (liquid) transitions into a crystal (solid).

Throughout the present disclosure a "biological process" may be understood in that it includes a number of chemical reactions, e.g. two or more. A biological process may be modulated in its frequency, rate or extent. Examples for biological processes include growth, e.g. a higher rate of anabolism than catabolism or (e.g. seed) germination, as well as homeostasis, cell organization, metabolism (e.g. rate) and the like.

Also, biochemical reactions and or biochemical processes may be influenced, e.g. chemical processes that occur in (e.g. living) organisms.

The term "influence" as used throughout the present disclosure may be understood as changing, altering, modifying, varying, regulating, affecting, adjusting, adapting, accelerating, decelerating, stopping and/or transforming a chemical reaction and/or a biological process and/or a phase transition process. Also, not only the chemical reaction as a whole may be influenced but rather also one or more of the sub-steps or intermediate steps of the chemical reaction and/or the biological process, and/or the phase transition process including selective, targeted or specific influencing of a certain parameter thereof.

For example, the rate in which a chemical reaction occurs may be "influenced" such that the chemical reaction occurs, for example, faster, i.e. the speed at which the reaction proceeds is increased. In other situations, it might be possible to also slow down (or even stop) the reaction rate, i.e. in certain examples the speed of the chemical reaction may be decreased.

The same may apply also for a biological process and/or biochemical processes.

For a phase transition process, for example, e.g. the process of forming a crystalline structure may be influenced according to the invention, e.g. such that the crystal formation occurs, e.g. faster, slower, stops etc.

In this regard, an "influence" according to the invention and as used throughout the disclosure may also be understood in resulting in a more homogeneous shape or distribution, e.g. of the crystals that are formed.

Chemical reactions may be defined using the Arrhenius equation:

$$k = Ae^{\frac{-E_a}{RT}}, \hspace{3cm} 1)$$

wherein k may be the reaction rate coefficient, e.g. the frequency of collisions resulting in a reaction, i.e. it quantifies the rate and direction of the reaction (e.g. the speed), A is a pre-exponential factor, e.g. a constant that may be selected for a particular chemical reaction which is sometimes referred to as frequency factor, R is the universal gas constant (R=8,314 $\frac{kg\ m^2}{s^2 mol\ K}$), T is the absolute temperature (e.g. in Kelvin K), and $E_a$ is the activation energy (e.g., in the same unit as RT or $k_B T$) defining the energy that must be provided to, e.g. the compounds to result in a chemical reaction, when the Arrhenius equation is alternatively expressed using the Boltzmann constant as:

$$k = Ae^{\frac{-E_a}{k_B T}}. \hspace{3cm} 2)$$

The units of the pre-exponential factor A may be identical to those of the rate constant and will vary depending on the order of the reaction. If the reaction is first order it may have the units of $s^{-1}$, and may thus be often called the frequency factor or attempt frequency of the reaction. Most simply, k may be the number of collisions that result in a reaction per second, A may be the number of collisions (leading to a reaction or not) per second occurring with the proper orientation to react and $e^{\frac{-E_a}{RT}}$ may be the probability that any given collision will result in a reaction.

On the basis of the Arrhenius equation, it can be seen that a chemical reaction (or a biological process) may be influenced by changing/varying its parameters, e.g. increasing/decreasing the temperature T or, e.g., increasing/decreasing the activation energy $E_a$ which will also result in an increased/decreased rate of chemical reaction.

One way to do so is to, e.g., decrease the activation energy $E_a$ using catalysts.

However, the reaction rate k of the Arrhenius equation may also be influenced using radiation, such as non-ionizing radiation.

For example, an increase of a radiation level may also cause acceleration of the reactions (i.e. similar to an increase in temperature T) as well as a higher chance of mutations (e.g. in biological processes), while a decrease of the radiation level of, e.g. non-ionizing radiation, may lead to deceleration of the reactions (i.e. similarly to a decrease in temperature T). The same may apply to parameters in a phase transition process.

As such, "influencing a chemical reaction and/or a biological process" may be understood as providing an influence by using non-ionizing radiation, which may have a direct impact on the chemical reaction and/or the biological process and/or a phase transition process, e.g. similar to varying, for example the temperature T or the activation energy $E_a$, the concentration or the pressure p etc. This may allow, for example, to control the chemical reaction (or one or more of its sub-steps or intermediate steps) and/or the biological process as a whole by providing radiation controllably. The same applies to phase transition processes.

Furthermore, biochemical processes/reactions may be also influenced by using radiation, e.g. non-ionizing radiation.

For a phase transition process, non-ionizing radiation, e.g. gravitational radiation as disclosed herein, may act as "ripples", e.g. slightly changing the energy distribution of atoms and molecules, e.g. during formation. Such a change may be relatively small but at the point of a transition, e.g. from liquid to solid, small influences may result in significant changes or effects, such as for example in a bubble chamber for ionized particle tracks visualization.

As discussed herein, experiments have shown that influencing at least one of a reaction rate of a chemical reaction and/or a biological process and/or a phase transition process according to the invention disclosed herein, may have a severe impact, for example on a growth rate of plants and/or a seed germination rate of plants.

Also, as experiments show that the rate of mineral crystal formation, e.g. a forming of a crystalline structure from a solution, may be influenced, e.g. accelerated, decelerated and/or made more uniform/homogeneous. The experiments have been carried out using non-ionizing radiation as discussed in detail throughout this disclosure, e.g. gravitational radiation.

At least one chemical reaction may be influenced, e.g. alone or in connection with a biological process and/or a phase transition process. At least one biological process may be influenced, e.g. alone, or in connection with at least one phase transition process and/or a chemical reaction. A phase transition process may be influenced, e.g. alone, or in connection with a chemical reaction and/or a biological process. At least one of a rate of a chemical reaction and/or a biological process and/or a phase transition process may be influenced.

The apparatus according to the present invention may be constructed in order to utilize the Gertsenshtein effect for generating a gravitational signal or gravitational radiation in the form of a gravitational wave.

As such, the terms "gravitational signal", "gravitational wave" and "gravitational radiation" may be used interchangeably herein.

In general, the Gertsenshtein effect describes that light (electromagnetic radiation) in a magnetic field will produce a gravitational wave or gravitational radiation via wave resonance. In other words, electromagnetic radiation and gravitational waves may be coupled.

According to general relativity, electromagnetic (EM) and gravitational waves (GW) propagate at the same speed, are linearly related, and therefore wave resonance between them is possible.

The term " EM source assembly" as used throughout the present disclosure may be understood as a device, unit or apparatus that includes one or more EM source devices, (e.g. one or more light sources) that are able or configured to provide or generate electromagnetic radiation, e.g. photons, having particular radiation characteristics, e.g. a certain wavelength, frequency, energy, amplitude, intensity and/or electromagnetic radiation having a particular radiation signal pattern, e.g. the electromagnetic radiation may be provided constantly, in a reoccurring manner, repeatedly, pulsed, periodic or quasi-periodic, gradually (e.g. increasing or decreasing in, e.g., energy, frequency, wavelength, intensity etc.), divided by an arbitrary time series of values etc.

For example, in cases where the EM source assembly includes only one EM source device, the terms "EM source assembly" and "EM source device" may be used interchangeably. As such, the features discussed herein with respect to the EM source assembly may correspondingly apply to a single EM source device also.

Furthermore, it should be noted that, it is not necessary to provide a ("strong") laser, e.g. capable of providing light at great energies, intensities etc. Rather, the provision of one or more LED's (light emitting diodes) may be also sufficient. In some cases, a laser may also be provided, e.g. when more power is required.

The EM source assembly may be configure to provide light (e.g. monochrome light) having a wavelength that may be in the visible range, e.g. 350-900nm, and, preferably 470 nm or 525 nm.

However, also other wavelengths of the electromagnetic radiation are possible, e.g. wavelengths in the UV range (e.g. 100-400nm), or in the IR range (e.g. 780 nm-1mm) as well as other suitable wavelengths (e.g. above or below IR/UV).

The EM source assembly may include one or more LED's for providing electromagnetic radiation, the electromagnetic radiation may be photons having a wavelength in the range of 430-900 nm, preferably a wavelength in the range of 450nm to 530nm and more preferably 470 nm, e.g. "blue" light or 525nm (e.g. almost "green" light).

For experiments, a wavelength of 525 nm was used for the EM source assembly. However, usage of other wavelengths is also possible. For example, when an electromagnetic radiation of approximately 525 nm is used, the resulting or generated gravitational wave may also have a wavelength of 525 nm, e.g. due to the coupling between electromagnetic radiation and gravitational waves.

The electromagnetic radiation, e.g. photons, that will be generated by the EM source assembly may enter the guiding device that may be "coupled" to the EM source device.

The guiding device may be an element, tube, antenna, wave-guide or pipe that is configured to transport, transmit, carry, transfer, convey or communicate electromagnetic radiation, e.g. light, from a light source, such as the EM source assembly, to another position where the electromagnetic radiation, e.g. the light is to be used or required. The guiding device may also be used to bend light, e.g. around corners. As such, the guiding device may be configured to transport the electromagnetic radiation to a desired place.

The guiding direction in such cases may correspond to the dimension, progression, course or direction of the guiding device as the electromagnetic radiation, e.g. the light, travels along the guiding device or is transported therein. In other words, the guiding direction may correspond to the form, direction, dimension or progression of the guiding device, e.g. they may coincide.

To be able to guide the light emitted from the EM source assembly, the guiding device may be placed closely to the EM source assembly, e.g. the light source, e.g. such that the resulting photons may enter the same. The closer the guiding device is positioned to the EM source assembly, e.g. the light source, the more efficiently the light can be transferred. Materials for guiding devices may be in an optical range of the electromagnetic radiation and can be optical acrylic or polycarbonate. In experiments, a light pipe made of polycarbonate with a length of approximately 1000 mm, i.e. 1 meter, was used to guide the light provided by the EM source assembly.

Thus, when reference is made to the guiding device being "coupled to" the EM source assembly, this may be understood in that such a coupling should at least enable/allow the electromagnetic radiation provided by the EM source assembly to enter the guiding device.

As such the "coupling" between the guiding device and the EM source assembly does not require a physical attachment or fixation, e.g. physical contact to the EM source assembly.

Rather, a small distance or spacing of e.g. approximately 5 cm is sufficient to be regarded as a being "coupled" or as a "coupling". However, this does not exclude a physical attachment, e.g. contact between the components.

The guiding device may be arranged such that it guides, leads, transports, delivers, transfers, carries or moves the light emitted by the into a region of the apparatus, in which a magnetic field is provided, e.g. the signal-generation region and/or the magnetic field provided by the magnetic assembly.

The term "magnetic assembly" as used throughout the present disclosure may be understood as an apparatus, device, unit or entity that is able to generate a magnetic field, e.g. in a signal-generation region. A magnetic assembly may have or include sources of magnetic fields, such as one or more magnets and/or magnetic poles. The magnetic assembly may be constructed or mounted such that a spacing, gap or distance A between a first and a second magnet is provided, such that, e.g., the guiding device may be arranged therein or guided therethrough. The magnetic assembly may include permanent magnets, electromagnets or the like.

In other words, the guiding device may be arranged to traverse, pass, cross, penetrate or intersect the distanced provided by the magnetic assembly, e.g. such that the magnetic field is able to interact with the guiding device and, particularly, with the electromagnetic radiation, e.g. the light from the EM source assembly, guided therethrough.

The distance, gap or spacing provided by the magnetic assembly, i.e. between the first magnet and the second magnet may be less than 50 mm, preferably less than 10 mm.

The magnetic assembly may be configured to provide one or more magnetic fields B.

However, in case of the magnet assembly including more than, e.g., one magnet, e.g. a first and a second magnet, also a first and a second magnetic field, e.g. B 1 and B2, may be provided. The first and second magnetic fields, e.g. B1 and B2, may be equal, e.g. having the same magnetic field strength or different.

The distance, gap or spacing A provided by the magnetic assembly may generally depend on the number of magnets used as well as on the strength of the magnetic field provided. The magnetic field that is used generally depends on the wavelength of the initial electromagnetic radiation provided by the EM source assembly. For example, in case the light has a wavelength of approximately 470 nm, a magnetic field of B= 1 T may be used in order to generate gravitational radiation according to the Gertsenshtein effect.

The first and/or the second magnet and/or the magnetic assembly may include neodymium magnets made from neodymium, iron and boron and may provide one or more magnetic fields of, e.g., at least 0.5-IT.

When the electromagnetic radiation, e.g. the light, guided through the guiding device reaches the magnetic field, it will generate a signal, e.g. in the form of a gravitational signal, gravitational radiation or a gravitational wave according to the Gertsenshtein effect.

Thus, the term "signal-generation region" as used throughout the present disclosure refers to a region or a section in which the electromagnetic radiation, e.g. the light and the magnetic field come together, encounter each other or interact and in which the resulting gravitational wave that is to be directed towards the at least one chemical reaction and/or the biological process and/or the phase transition process, is created or generated.

The magnetic field provided by the magnetic assembly may be substantially perpendicular to the direction of the guiding device and/or also the direction of the light guided/transported therein, e.g. in order to generate a gravitational signal.

As mentioned above, the magnetic field may be provided using an array, e.g. or one or more (e.g. permanent rare-earth) magnets or electromagnets that are, e.g., adjacent to each other or serially, sequentially arranged. The magnets may be made, e.g. from alloys of rare-earth elements. The magnets used may be, for example, neodymium magnets and/or samarium-cobalt magnets.

A computing device may control radiation characteristics and/or a radiation signal pattern of the gravitational radiation by controlling radiation characteristics and/or a radiation signal pattern of the electromagnetic radiation provided by the EM source assembly.

For example, the electromagnetic radiation provided by the EM source assembly may be controlled to be provided at different radiation characteristics, such as different wavelengths, frequencies, amplitudes, intensities, energies etc. which results in that the gravitational radiation being correspondingly provided at different radiation characteristics, e.g. different wavelengths, frequencies, amplitudes, intensities, energies etc.

For example, a first electromagnetic radiation having a first wavelength of 470 nm may be provided for a time of, e.g. 5 seconds, while a second electromagnetic radiation of, e.g. 570 nm, may be provided for a time of, e.g. 5 seconds. The magnetic field in this example that is provided by the magnetic assembly may remain constant, e.g. at a value of 1 T. Since the photons and the gravitational waves are coupled, i.e. as mentioned above with respect to the Gertsenshtein effect, varying the radiation characteristics of the electromagnetic radiation also results in varying the radiation characteristics of the gravitational radiation, e.g. the wavelengths of the gravitational radiation.

This procedure, i.e. controlling the initial electromagnetic radiation of the EM source assembly to control the gravitational radiation, allows to customize the resulting gravitational radiation such that the same may be provided controllably, e.g. having a desired radiation characteristic.

Alternatively or in addition thereto, a radiation signal pattern of the electromagnetic radiation may be controlled, e.g. the radiation of the EM source assembly may be provided in a particular pattern.

For example, the electromagnetic radiation provided by the EM source assembly may be controlled to be provided at different radiation signal patterns, including providing the electromagnetic radiation constantly, in a reoccurring manner, repeatedly, pulsed, periodic or quasi-periodically, gradually (e.g. increasing or decreasing in, e.g., frequency, intensity, energy etc.), divided by an arbitrary time series of values etc.

For example, a first electromagnetic radiation having a first wavelength of 470 nm may be provided, e.g. in a pulsed manner, for example every 3 seconds, while a second electromagnetic radiation of, e.g. 470 nm (or possibly also another/different wavelength), may be provided in a different pulsed manner of, e.g. every 10 seconds. It is also possible that the second electromagnetic radiation is provided, for example, constantly or following a different radiation signal pattern or even following the pulse (e.g. 3 s) of the first electromagnetic radiation. The magnetic field in this example that is provided by the magnetic assembly may remain constant, e.g. at a value of 1 T. Since the photons and the gravitational waves are coupled, i.e. as mentioned above with respect to the Gertsenshtein effect, varying the radiation signal pattern electromagnetic radiation also results in varying the radiation signal pattern of the gravitational radiation. Thus, the gravitational radiation originating from the first and the second electromagnetic radiation may be correspondingly provided at a pulse every, e.g., 3 seconds and every, e.g. 10 seconds, respectively.

Various combinations between the radiation characteristics and the radiation signal pattern of the electromagnetic radiation of the EM source assembly and, consequently, the gravitational radiation are possible, including but not limited to

i) varying the radiation characteristics of a first and/or second electromagnetic radiation while using the same radiation signal pattern for the first and/or second electromagnetic radiation;
ii) varying the radiation signal pattern of a first and/or second electromagnetic radiation while using the same radiation characteristics for the first and/or second electromagnetic radiation;
iii) varying both the radiation characteristics of a first and/or second electromagnetic radiation and the radiation signal pattern for the first and/or second electromagnetic radiation, e.g. such that a first EM radiation is provided at a first radiation characteristic and a first radiation signal pattern while a second EM radiation is provided at a second radiation characteristic being different from the first radiation characteristic and a second radiation signal pattern being different from the first radiation signal pattern;
iv) using the same radiation characteristics of a first and/or second electromagnetic radiation and the same radiation signal pattern for the first and/or second electromagnetic radiation, etc.

That way, a controlled, customized, pre-defined, selected, pre-configured or specified gravitational wave signal (radiation) may be provided that can be used to controllably influence at least one chemical reaction and/or a biological process and/or a phase transition process, e.g. in a controlled or customized way. This may also allow to individually influence a chemical reaction, since different radiations may have a different (e.g. a stronger, weaker or none) influence on different/individual chemical reactions. The same applies for phase transition processes.

The apparatus of the present invention is generally configured to provide non-ionizing radiation, e.g. gravitational radiation. Non-ionizing radiation may be regarded as radiation that does not have/carry enough energy per quantum to ionize atoms or molecules, e.g. to remove an electron from an atom or molecule.

For example, ionizing radiation may have a higher frequency and shorter wavelength than non-ionizing radiation which can thus be more hazardous upon exposure. Examples of non-ionizing radiation include electromagnetic radiation, e.g. near ultraviolet radiation (UV), visible light, i.e. wavelengths of approximately 380-750 nm, infrared (IR) light, i.e. wavelengths of 0,7 and 300 micrometers, microwave radiation, i.e. approximately a millimeter mm to a meter m, radio waves or radiation having very low or extremely low frequency, e.g. in the range of 3 to 30 kHz (i.e. very low frequency VLF) or 300 Hz to 3 kHz or even higher (i.e. extremely low frequency ELF).

As such, non-ionizing radiation may not only include electromagnetic radiation (i.e. of different wavelengths) but also gravitational radiation such as gravitational waves, or even neutrinos, e.g. resulting from beta decay or atmospheric neutrinos, or any particle or radiation not having enough energy to ionize a substance (e.g. muons).

Example sources that are known to emit gravitational radiation include two objects orbiting each other, e.g. as the Earth will orbit the Sun, a spinning planetoid, a supernova etc. As is the situation with electromagnetic waves, gravitational waves or gravitational radiation may be characterized using amplitude, e.g. the size of the wave, frequency f, wavelength $\lambda$, speed the wave travels etc. For gravitational waves, this speed may be equal to the speed of light.

The term "focus area" as used throughout the present disclosure may be understood as an area in which radiation, e.g. gravitational radiation, is provided. The focus area may thus also be understood as a "radiation area", e.g. in which gravitational radiation is being emitted or provided. The focus area may have a starting point and an endpoint as well as an (radiation) area therebetween.

The focus area may also include one or more different zones which may be, e.g. divided, separated by one or more spacing(s) in which no gravitational radiation is provided. The one or more zones may for example also include radiation of different radiation characteristics, e.g., wavelengths and/or frequencies, for example when two EM source devices are used and/or radiation signal pattern. The focus area in experiments was of a conus or cone-shape, e.g. conical having approximately 2x10 degrees. Other shapes of the focus area are possible.

However, in order to verify the impact or the influence of the gravitational signal to, e.g. the at least one chemical reaction and/or the biological process and/or a phase transition process, it is beneficial to use different samples or probes that each include or are composed of the at least one chemical reaction and/or the biological process and/or the phase transition process.

A "sample" or "probe" as used throughout the present disclosure may be understood as the object or sample under investigation, i.e. including the at least one chemical reaction and/or the least one biological process and/or at least one phase transition process. A probe or sample may include for example one or more plants, an agent, one or more seeds, a solution used for crystal growth, a sample of a (living) organism or (living) tissue etc.

In connection therewith, it is beneficial to also use a "control sample".

A "control sample" as used throughout the present disclosure may be understood as a probe or sample that is identical or equal to the object under investigation, e.g. including the same plant (e.g. of the same sort), the same seeds (e.g. of the same sort), the same solution for crystal formation in, e.g. the same amount, the same agent, the same concentration etc.

The probe or sample under investigation is being arranged "at least partially within" the focus area which as used throughout the present disclosure may be understood in that the influencing with gravitational radiation may be performed selectively, i.e. on certain parts, sections or regions of the probe. This not only allows to influence the probe as a whole but also only (selected) parts thereof.

The control sample on the other hand may be located outside the focus area such that it is not affected by the gravitational radiation provided. This allows to compare the effects of the gravitational radiation on the sample under investigation, e.g. within the focus area, with the control sample outside the focus area which, therefore, serves as a, e.g., reference. This also allows to draw conclusions on the effects of the gravitational radiation provided, e.g. upon comparing the probe with the control sample, e.g. in terms of differences in growth, germination, crystal formation, how fast/slow the reaction occured etc.

The differences between the probe or sample under investigation and the control sample may be used as an indication to conclude to the impact of the gravitational radiation on the probe, as compared to the control sample without influence of gravitational radiation and particularly on the at least one chemical reaction, e.g. the rate thereof, and/or the biological process and/or the phase transition process.

This measurement procedures may correspondingly apply to the system and the method disclosed herein.

Furthermore, a system to influence at least one of a rate of a chemical reaction and/or a biological process and/or a phase transition process is provided, the system comprising:

a generator device assembly for providing non-ionizing radiation in a focus area, the non-ionizing radiation being gravitational radiation in form of gravitational waves, and
a probe including at least one chemical reaction and/or a biological process and/or a phase transition process, being arranged at least partially within the focus area.

The system may further include,

a feedback sensor assembly for detecting the gravitational radiation and for providing at least one feedback signal in response to the detection,
the feedback sensor assembly being arranged at least partially within the focus area and
a computing device coupled to the generator device assembly and the feedback sensor assembly for controlling the provision of gravitational radiation of the generator device assembly in dependence of the at least one feedback signal.

The term "generator device assembly" as used throughout the present disclosure may be understood as an assembly, unit or apparatus that includes one or more generator devices. For example, the generator device assembly may include at least one generator device or may include two or even more generator devices. For example, in cases where the generator device assembly includes only one generator device, the terms "generator device assembly" and "generator device" may be used interchangeably. As such, the features discussed herein with respect to the generator device assembly may correspondingly apply to a single generator device also. In particular, a generator device may be an apparatus for outputting a gravitational radiation, i.e. as mentioned above having the features of the apparatus.

As such, a generator device assembly or one or more generator devices may include a computing device, an electromagnetic radiation (EM) source assembly configured to provide electromagnetic radiation, a magnetic assembly configured to provide a magnetic field in a signal-generation region,

A guiding device may be coupled to the EM source assembly, the guiding device may be configured to guide the electromagnetic radiation provided by the EM source assembly along a guiding direction and into the signal-generation region, wherein the magnetic field in the signal-generation region being perpendicular to the guiding direction of the guiding device, and a focus area for outputting a gravitational radiation generated in the signal-generation region when the electromagnetic radiation of the laser assembly interacts with the magnetic field provided by the magnet assembly, the focus area being directed to at least partially cover the at least one chemical reaction and/or the biological process and/or the phase transition process.

The term "feedback sensor assembly" as used throughout the present disclosure may be understood as an assembly, unit or apparatus that includes one or more feedback sensors. For example, the feedback sensor assembly may include at least one feedback sensor or may include two or even more feedback sensors. For example, in cases where the feedback sensor assembly includes only one feedback sensor, the terms "feedback sensor assembly" and "feedback sensor" may be used interchangeably. As such, the features discussed herein with respect to the feedback sensor assembly may correspondingly apply to a single feedback sensor also. Feedback sensors may be used optionally, e.g. to increase accuracy of measurement or to control the experiments, e.g. gravitational radiation provision in terms of radiation characteristics and/or radiation signal pattern.

A feedback sensor device assembly or a feedback sensor may be a device or apparatus to detect at least some radiation provided by the generator device assembly, e.g. non-ionizing radiation. The feedback sensor device assembly may be further configured to provide feedback, e.g. in the form of a feedback signal upon detecting radiation, e.g. gravitational radiation, provided by the generator device assembly.

The feedback signal may be a signal including information about the gravitational radiation provided by the generator device assembly, such as frequency, wavelengths, intensity, amplitude, speed, phase etc. The feedback signal may include information about the radiation characteristics and/or information about the radiation signal pattern.

Furthermore, the feedback signal may be a signal including information on the radiation that is present naturally (e.g. background), i.e. without provision of (artificially generated) radiation, e.g. generated by the generator device assembly. In this case, the feedback signal includes information on the background radiation or the background radiation level. To this end, the feedback signal may also include information about the deviations from such a background radiation level or may be proportional to the detected deviations.

The deviations include deviations between the background radiation, i.e. without artificial provision of gravitational radiation, and the radiation provided by the generator device assembly or deviations from an average background radiation (e.g., an increased background radiation or decreased background radiation compared to average). The feedback signal may be provided to a computing device for further analysis, e.g. data analysis techniques or may be also provided directly to the generator device assembly.

The feedback sensor assembly may be located within the focus area provided by the generator device assembly.

In case the focus area comprises more than one zone, e.g. a radiation zone in which gravitational radiation is provided, the feedback sensor device assembly should be arranged in the same zone as the (part of the) probe or sample whose at least one chemical reaction and/or biological processes and/or phase transition process is influenced using the gravitational radiation provided by the generator device assembly.

In such instances, the feedback signal may be directly indicative of the radiation provided in the respective focus area (or the radiation zone respectively).

Usage of one or even more feedback sensors allows for example to more accurately adjust, e.g. the radiation characteristics and/or the radiation signal pattern of the gravitational radiation that is used to influence the probe.

The feedback sensor assembly and the generator device assembly may be coupled to a computing device for controlling the provision of gravitational radiation of the generator device assembly in dependence of the at least one feedback signal. This allows adjusting, setting, selecting, configuring, specifying or choosing the appropriate/desired radiation characteristics and/or radiation signal pattern.

The feedback sensor assembly may be configured to detect the gravitational radiation provided by the generator device assembly and, on the basis thereof, the electromagnetic radiation provided by the EM source assembly of the generator device assembly and, correspondingly, the gravitational radiation thereof that is provided in the focus area may be controlled.

As such, a feedback sensor assembly may be used to crosscheck the gravitational radiation that is being provided to the probe under investigation, e.g. within the focus area as compared to a control sample, e.g. outside the focus area and not affected by gravitational radiation. This may also be used to more accurately define, set, apply or provide the radiation, e.g. in terms of radiation characteristics and/or radiation signal pattern.

Controlling the radiation characteristics and/or the radiation signal patterns using a feedback sensor assembly therefore may increase the accuracy of such measurements.

The generator device assembly may also comprises two or more generator devices, including

a first generator device configured to provide a first gravitational radiation in a first focus area to influence at least one of a rate of a chemical reaction and/or a biological process and/or a phase transition process and

a second generator device configured to provide a second gravitational radiation in a second focus area to (e.g. additionally) influence at least one of the rate of the chemical reaction and/or a biological process and/or a phase transition process.

The computing device may control the first and/or the second generator device to provide the first gravitational radiation having radiation characteristics and/or radiation signal patterns being different from the radiation characteristics and/or radiation signal patterns of the second gravitational radiation. Alternatively, they may also be the same or equal.

The generator device assembly may include even more than two generator devices, each configured to provide radiation at a certain radiation characteristic and/or radiation signal pattern and each providing the gravitational radiation within a respective focus area, such as a first, second, third focus area etc. The respective focus areas may be separated from each other, e.g. by a spacing or distance at which no gravitational radiation is provided, or they may be overlapping. Also, a combination therebetween may be provided.

For example, the first focus area and the second focus area may be provided separately (e.g. spatially separated and/or timely separated) from each other, e.g. to influence different portions of the probe, e.g., at different times, or they may be provided to be overlapping, e.g. provided at the same time and defining an overlap area.

An overlap area may be provided such that the probe may be influenced by both the first and the second radiation, e.g. simultaneously, at once or concurrently, or also one after another, e.g. serially, sequentially, alternating, alternatively, in turn etc. Instead of overlapping, the first and the second focus area may also be directly adjacent to one another, e.g. such that an endpoint of the first focus area coincides with a starting point of the second focus area to provide, for example, a smooth, uniform or steady transition of gravitational radiation, e.g. having different radiation characteristics such as a transition from one wavelength to another.

Each of the one or more focus areas may be partitioned or divided in different radiation zones, wherein each radiation zone may have a different radiation characteristic and/or radiation signal pattern. As such, the term "focus area" may also be understood as the sum of each of the one or more individual radiation zones.

The overlap area may be provided such that the at least one chemical reaction and/or the biological process is affected or influenced by gravitational radiation provided therein, i.e. such that the overlap area covers the probe in a way that the probe is affected or influenced by both the first and the second non-ionizing radiation. Contrary thereto, the control sample or control probe is not affected by gravitational radiation, in order to have a reference that may be used to compare the effect of the gravitational radiation applied, e.g. over time.

The first and/or the second generator device may include

a computing device,
a EM source assembly configured to provide electromagnetic radiation,
a magnetic assembly configured to provide a magnetic field in a signal-generation region,
a guiding device coupled to the EM source assembly,
the guiding device being configured to guide the electromagnetic radiation provided by the EM source assembly along a guiding direction and into the signal-generation region,
wherein the magnetic field in the signal-generation region being perpendicular to the guiding direction of the guiding device, and
a focus area for outputting gravitational radiation generated in the signal-generation region when the electromagnetic radiation of the EM source assembly interacts with the magnetic field provided by the magnet assembly,
the focus area being directed to at least partially cover at least one of the chemical reaction and/or the biological process and/or the phase transition process.

The computing device may control radiation characteristics and/or a radiation signal pattern of the first and/or the second gravitational radiation by controlling radiation characteristics and/or a radiation signal pattern of the electromagnetic radiation provided by the EM source assembly of the first and/or the second generator device.

The feedback sensor assembly may comprise two or more feedback sensors including a first feedback sensor configured to provide at least a first feedback signal indicative of a first gravitational signal or radiation and a second feedback sensor configured to provide at least a second feedback signal indicative of a second gravitational signal or radiation.

Both the first and the second feedback sensors may be arranged within the first focus area or the second focus area, in both the first and the second focus area (e.g. at least partially) or within the overlap area.

Also, it is possible locate a first feedback sensor within the first focus area, the second focus area or the overlap area, e.g. to provide a first feedback signal indicative of the gravitational radiation in the first focus area, the second focus area or the overlap area while the second feedback sensor is located outside of the first focus area, the second focus area or the overlap area, e.g. to provide a second feedback signal indicative of, e.g., background radiation that is affecting the control sample.

The feedback sensor assembly may also comprise a third and fourth feedback sensor or even more. The feedback sensor assembly should be arranged at least partially within the focus or radiation area of the generator device and, also, in the vicinity of the probe under investigation including the at least one chemical reaction and/or the biological process and/or the phase transition process. This allows to determine the gravitational radiation, i.e. in terms of radiation characteristics and/or radiation signal pattern that affects the probe/sample under investigation, e.g. as compared to the control sample.

The wording "at least partially within" as used throughout the present disclosure may be understood as arranging the feedback sensor assembly spatially in the vicinity of the chemical reaction and/or the biological process and/or the phase transition process, e.g. the probe/sample under investigation. Also, with respect to the focus area, the radiation area and/or the radiation zones, it may be understood as arranging the feedback sensor spatially therein in such way that the feedback sensor assembly is able to detect the gravitational radiation provided therein (e.g. artificially by the generator device assembly or background).

The system may further comprise a synchronization device to synchronize the first and the second generator device, or the EM source assemblies thereof, in providing the first and the second gravitational radiation.

"Synchronizing the first and the second generator devices" may be understood in providing, e.g. a first and a second gravitational radiation synchronized with respect to radiation characteristics and/or the radiation signal patterns.

The feedback sensor assembly or the first and/or second feedback sensor may include a thermally activated delayed fluorescence (TADF) detector, for detecting gravitational radiation provided by the generator device assembly.

A TADF detector may comprise:

a computing device,
a detection layer comprising thermally activated delayed fluorescence TADF material, the thermally activated delayed fluorescence TADF material having an excitation frequency range and, exhibiting upon excitation with radiation in the excitation frequency range, a thermally activated delayed fluorescence TADF emission,
an excitation radiation source device adapted to emit excitation radiation in the excitation frequency range in order to excite the TADF material, the excitation radiation being electromagnetic radiation,
a radiation detector device communicatively coupled with the computing device, the radiation detector device being adapted to detect TADF emission from the detection layer and provide respective detection data to the computing device,
the TADF material having a first TADF emission pattern excited by the excitation radiation without exposure to gravitational radiation and a second TADF emission pattern excited by the excitation radiation, with exposure to gravitational radiation,

- the computing device being adapted to

  - compute detection data from the radiation detector device to determine the first TADF emission pattern excited by excitation radiation without exposure to gravitational radiation and the second TADF emission pattern excited by the excitation radiation with exposure to gravitational radiation,
  - compare the first and the second determined TADF emission patterns,
  - determine, on the basis of the comparison, exposure to gravitational radiation and a gravitational signal in the detection layer.

The term "excitation frequency range" as used throughout the present disclosure may be understood as a range of frequencies, e.g. a plurality thereof that is suitable to excite the TADF material at least from the ground state $S_0$ to an energetically higher state, e.g. $S_1$.

For example, the excitation radiation source may be, e.g., a LED that emits excitation radiation in the form of electromagnetic radiation, e.g., photons, having a wavelength in the range of approximately 430-470 nm.

Generally, any type of one or more TADF material and combinations thereof may employed.

However, an exemplary TADF material used in experiments included an organic luminofor comprising a mixture of fluorescein Natrium and boric acid.

A possible mass ration of the components can be in the range of approximately 1:100,000 - 1:500.

The components can be mixed and heated to manufacture the exemplary TADF material, for example according to a specific heating profile. For example, the mixed materials may be heated up a maximal temperature in the range between 200 °C and 260 °C for at least 20 minutes under a pressure, e.g., below 0.8 bar.

The heating may be performed in pre-molded forms to obtain TAFD material having a predefined shape. Also, after heating the material can be grounded and mixed with a carrier material (e.g. epoxy), after which the resulting material can be formed to get any desired shape (e.g. by applying onto a support surface).

Manufacturing the TADF material on the basis of selected materials as well as applying a specific heating curve serves to generate a (TADF) material having certain characteristics. In particular, the process of manufacturing the TADF material mentioned above may result in that the energy gap of the TADF material between the $S_1$ state and the $T_1$ state to be reduced, e.g. the singlet $S_1$ state and the, e.g. triplet state $T_1$ are brought closer together thereby.

A typical energy gap between the $S_1$ state and the $T_1$ state may be more than $\Delta E_{S1/T1}$ = 0,5 eV.

By providing the above-mentioned heating and the selected material composition, the energy gap may be reduced to $\Delta E_{S1/T1}$ = 0,24 eV or even less, e.g. to allow TADF emission to occur.

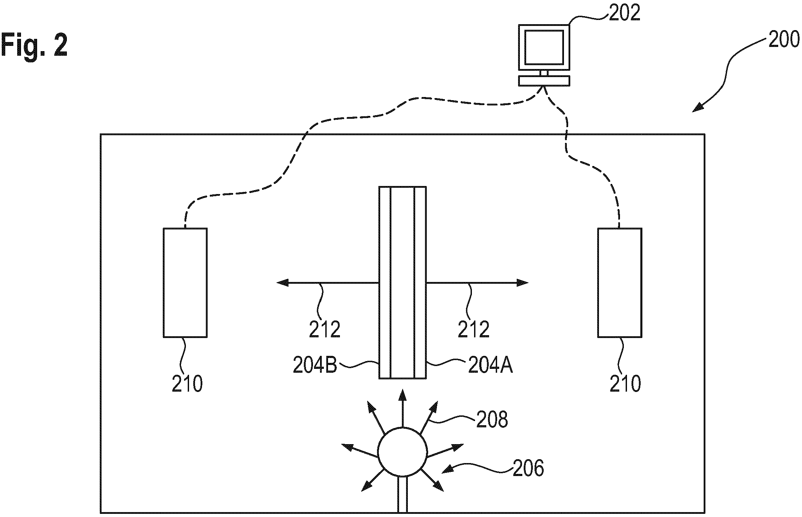

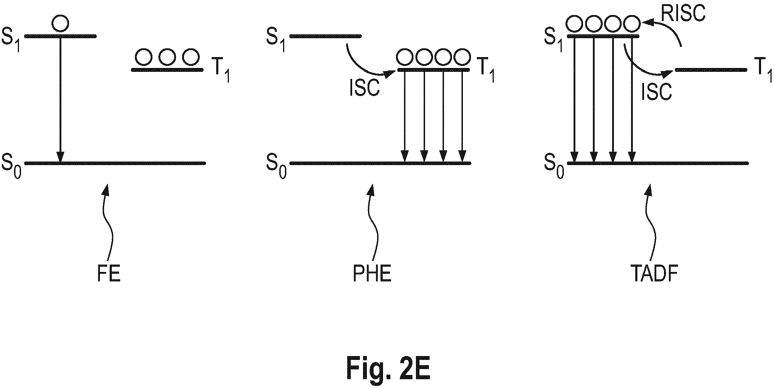

Fig. 2E illustrates the processes that may occur in a TADF material disclosed herein.

As mentioned before, the TADF material in the TADF detector may be excited from the ground state $S_0$ to an energetically higher state, e.g. the $S_1$ state.

A decay back from the $S_1$ state to the ground state $S_0$ results in a photon being emitted therefrom. This is referred to as fluorescence emission, or prompt fluorescence. The wavelengths of such fluorescence may be in the visible range, e.g. approximately between 400 to 900 nm. As such, fluorescence emission process follows the excitation scheme $S_0$ - $S_1$ - $S_0$.

However, when the energy gap $\Delta E_{S1/T1}$ between the $S_1$ state and the $T_1$ state is reduced, e.g. is extremely small as mentioned above, it may be possible for a TADF molecule to utilize, e.g. absorb, thermal energy in order to change, e.g. transition, move or be excited, from the excited $S_1$ state to the, e.g. neighboring, $T_1$ state. Such a transition is commonly referred to as an intersystem crossing (ISC) - transition or ISC process.

When the TADF molecule, e.g. after an ISC process took place, decays from the $T_1$ state back to the ground state $S_0$, a photon is emitted. This is referred to as phosphorescence emission. Phosphorescence emission occurs timely after fluorescence emission, since the transition from the $S_1$ state to the, e.g. neighboring, $T_1$ state requires more time than the process of fluorescence. As such, the phosphorescence emission process follows the excitation scheme $S_0$ - $S_1$ - $T_1$ - $S_0$.

However, another process may take place due to the reduced energy gap $\Delta E_{S1/T1}$ between the $S_1$ state and the $T_1$ state in the TADF material which is referred to as thermally activated delayed fluorescence (TADF).

That is, when a molecule of the TADF material is excited from the ground state $S_0$ to an energetically higher state, e.g. the $S_1$ state and undergoes an ISC transition from the $S_1$ state to the $T_1$ state, it is possible that the TADF molecule utilizes thermal energy, e.g. absorb, thermal energy in order to change, e.g. transition, move or be excited, from the $T_1$ state back to the $S_1$ state. Such a transition is commonly referred to as a reverse intersystem crossing (RISC) - transition or RISC process.

When the TADF molecule, e.g. after an RISC process took place, decays from the $S_1$ state back to the ground state $S_0$, a photon is emitted. This is referred to as thermally activated delayed fluorescence (TADF) emission.

Since the ISC and RISC transition takes more time than the ISC transition (phosphorescence) or the (prompt) fluorescence process ($S_0$ - $S_1$ - $S_0$), the thermally activated delayed fluorescence occurs timely after fluorescence and phosphorescence emission. As such, the thermally activated delayed fluorescence emission process follows the excitation scheme $S_0$-$S_1$ - $T_1$ - $S_1$ - $S_0$.

However, since the last decay of this scheme, e.g. the decay from $S_1$ - $S_0$, is the same as for the prompt fluorescence, it can be said that the TADF process also results in fluorescence emission, i.e. timely only later, since the ISC/RISC process require time to occur.

As such, photon emission resulting from thermally activated delayed fluorescence may be measured, detected or determined in the same way as photon emission resulting from conventional or prompt fluorescence.

Fig. 2E llustrates the processes of (e.g. prompt) fluorescence emission denoted by "FE", phosphorescence emission denoted by "PHE" and thermally activated delayed fluorescence emission denoted by "TADF". Also, the ground state $S_0$, an energetically higher state $S_1$ as well as the $T_1$ are illustrated. Furthermore, Fig. 2E illustrates the "ISC" and the "RISC" processes.

However, since for TADF emission the ISC and RISC processes are involved, this emission, e.g. the photons resulting from TADF emission, may comprise or "carry" information about the reduced energy gap $\Delta E_{S1/T1}$ which may be used in detecting gravitational radiation, e.g. the TADF detector being extremely sensitive due to the reduced and extremely small energy gap.

Since the TADF material perform fluorescence emission, phosphorescence emission and thermally activated delayed fluorescence emission upon excitation by light of, e.g., the LED, it may be necessary to differentiate therbetween in order to detect only photons resulting from thermally activated delayed fluorescence emission, e.g. that includes information with respect to the energy gap and, particularly, gravitational radiation.

To do so, a computing device may control the operation of the excitation light source, e.g. the LED, in providing excitation radiation, e.g. photons, to excite the TADF material.

For example, the excitation radiation source device, e.g. the light source or LED, may be controlled such that it emits excitation radiation synchronized with detection operation of the radiation detector device.

In some examples, the following procedure may be used:

The excitation radiation source device may be controlled or operated to emit excitation radiation for a predefined first period of time (e.g. a phase of 1 ms). During this time, the TADF molecules will undergo the (prompt) florescence process, i.e. a transition following the scheme $S_0$ - $S_1$ - $S_0$. During this time, the radiation detector device will be switched off (not detecting), i.e. to assure that no photons resulting from such a fluorescence process are measured.

Then, during a second predefined period of time (e.g. a phase of 1 ms) no excitation radiation is emitted, i.e. the LED stops providing photons to excite the TADF material and the radiation detector device is still not activated/operated to detect respective emissions, e.g. photon emission from the TADF material in the detection layer 12.

This period of time and phase, respectively, allows transition processes to occur, e.g. the ISC transition from the excited $S_1$ state to the $T_1$ state and the RISC transition from the $T_1$ state back to the $S_1$ state in, e.g., the TADF material. Since the radiation detector device is switched off detection of both photons resulting from fluorescence and the phosphorescence emission of the TADF material are excluded.

After that, e.g. during a third predefined period of time (e.g. a phase of 3 ms) the radiation detector device is activated/operated to detect photon emission from the detection layer of the TADF material, as this emission may be related to thermally activated delayed fluorescence from the TADF material, i.e. due to the longer time the thermally activated delayed fluorescence requires.

This "TADF measurement procedure" as it may be referred to herein, may be used to assure that only photons resulting from the thermally activated delayed fluorescence process are measured or detected by the radiation detector device that "carry" also information about the reduced energy gap.

As such, the first phase may also be referred to as the excitation phase in which the TADF material is excited by photons of the, e.g., LED. The second phase may be also referred to as an intermediate phase or a transition phase in which the ISC/RISC processes are allowed to occur, i.e. timely between the excitation phase and the detection phase. The third phase may be also referred to as a detection phase in which the emissions of the TADF material, particularly the thermally activated delayed fluorescence emissions, are detected/sensed.

In other examples, the excitation radiation source device, e.g. the LED, may be operated to emit excitation radiation as pulses of the same or different level and/or with predefined time intervals of the same or varying length in between. Also, the excitation radiation source device may be operated to emit constant excitation radiation (without periods without excitation radiation) of the same level or of at least two different levels (e.g. like a waveform or stepwise).

In some examples, the excitation phase and the detection phase may, at least partially, overlap.

For example:

- the excitation phase and the detection phase may start at the same time and may take place for the same period of time;

- the excitation phase and the detection phase may start at the same time, wherein the excitation phase ends, while the detection is phase is still ongoing and is continued for some further period of time;
- the detection phase takes place for a period of time, during which at least two excitation phases take place one after another with a pause therebetween (i.e. period of time without excitation), wherein the at least excitation phases may have the same duration or different durations;
- the excitation phase may start and, at some point of time when the excitation phase takes place, the detection phase may also start, wherein the excitation phase may end earlier or at the same time, or later than the detection phase.

In further examples, there may a transition phase between the excitation phase and the detection phase, during which transition phase neither excitation nor detection takes place.

The term "radiation detector device" as used throughout the present disclosure may be understood as an apparatus, device or detector that is suitable to detect the radiation, e.g. the photons, emitted by the TADF material, e.g. in response to excitation. As such, the radiation detector device may be at least suitable to detect fluorescence emission, phosphorescence emission and/or particularly thermally activated delayed fluorescence emission, e.g. the photons resulting from such an emission.

The term "suitable" as used throughout the present disclosure in connection with the radiation detector device may be understood that the resolution, binning, sensitivity, signal-to-noise ratio, accuracy, precision or amplification is suitable to detect at least the thermally activated delayed fluorescence emission.

For example, a radiation detector device suitable to detect thermally activated delayed fluorescence emitted from the TADF material is a charge-coupled device (CCD), a CCD array, CCD camera, CCD chip, CCD image sensor or any sensor used in digital imaging. Also, a CMOS sensor or a photodiode, i.e. a semiconductor that converts light into an electrical current may be used to detect TADF emission. This is because TADF emission occurs in the visible wavelength as mentioned above.

In the example of a photodiode, the material is critical defining its properties, because only photons with sufficient energy to excite the electrons across the materials band gap will produce significant photocurrents. The materials used are silicon, e.g. to detect photon wavelengths in the range of 190-1100 nm, Germanium, e.g. to detect photon wavelengths in the range of 400-1700 nm, Indium gallium arsenide, e.g. to detect photon wavelengths in the range of 800-26000 nm etc.

Experiments show that a CCD device or CMOS of any resolution and sensitivity in the TADF range (e.g. wavelength region of the emission) better than 1 Lux and with effective signal-to-noise ratio of more than 40 dB may be suitable to detect thermally activated delayed fluorescence emission.

However, also two or even more radiation detector devices may be used to detect thermally activated delayed fluorescence emitted by the TADF material of the detection layer. The detection data respectively generated by the radiation detector devices are computed by the computing device to determine one or more emission patterns resulting from thermally activated delayed fluorescence from the TADF material. Since detection data from two radiation detector devices may be available/used, the detection data from the different radiation detector devices can be used to compare the one or more emission patterns on one of radiation detector devices with the one or more emission patterns of the other radiation detector device.

For example, two and more radiation detector devices can be used for a correlated detection, e.g., synchronized detection data from different radiation detector devices. Synchronization may include to operate the radiation detection devices such that their respective detection data are provided at the same time or processed such that detection data generated at the same time and/or in the same time period are processed together. In addition or as alternative, synchronization may include to use detection data being generated at/in corresponding areas of the respective detection surfaces of the radiation detection devices. In addition or as alternative, synchronization may include using detection data being indicative of TADF emission coming from different parts/surfaces of the detection layer and TADF material, respectively, in order to, for example, detect TADF emission from opposing detection layer's surfaces.

In the TADF detector, an optical system, e.g. a convex or concave lens, may be used to collect and/or focus thermally activated delayed fluorescence emission (photons) from the TADF material onto the radiation detector device, in order to, for example, avoid "loosing" such radiation from being captured by the radiation detector device.

The TADF detector may comprise at least two radiation detector devices, wherein the detection layer may be arranged between the at least two radiation detector devices.

The radiation detection arrangement may comprise a control device for controlling the operation of the excitation radiation source device, e.g. the LED, wherein the control device may be adapted to operate the excitation radiation source device in a constant emission mode and/or a variable/modifiable emission mode, comprising pulsed and/or periodical emission mode.

The computing device may be able to compute detection data from the radiation detector device during and/or following radiation emission from the excitation radiation source device.

The term "TADF emission pattern" as used throughout the present disclosure may be understood in that photons of the TADF material are emitted according to a certain photon distribution, brightness or intensity. A TADF emission pattern may be detected, visualized and/or imaged using, e.g., a CCD array. In case of a discrete photodetector "TADF emission pattern" may be understood as a level at the output of the detector proportional to the TADF intensity, e.g. the intensity of the photons emitted from the TADF process.

For example, when the TADF material is excited by excitation radiation, e.g. by the LED as mentioned above, it will start emitting fluorescence photons, phosphorescene photons and thermally activated delayed fluorescence photons. Controlling the detection and excitation (e.g. TADF measurement procedure) may lead to a scenario in which only thermally activated delayed fluorescence photons will be measured by the radiation detector device (TADF measurement procedure), e.g. by the CCD device/array.

Experiments have shown that the TADF emission pattern may be affected, influenced, disturbed, impacted, bent, deformed, shifted, changed, altered or modified when gravitational waves interact with either the TADF emission pattern or the TADF material.

Comparing a TADF emission pattern, excited by electromagnetic radiation when also gravitational radiation is present with a TADF emission pattern, excited by electromagnetic radiation, when gravitational radiation is not present may allow to determine characteristics of the gravitational radiation, such as e.g. radiation characteristics and/or radiation signal pattern. To do so, data analysis techniques can be used, e.g. analyzing the output of the CCD array or analyzing the itme series of the discrete photo sensor output.

For example:

Using a generator device assembly as mentioned above, it is possible to provide gravitational radiation in form of a gravitational wave.

For example, the generator device may be "switching on" resulting in the EM source assembly starting to emit electromagnetic radiation by which gravitational radiation is generated provided.

"Switching off" the generator device, results in that no electromagnetic radiation is emitted by the EM source assembly, and, consequently also no gravitational radiation is being generated/provided.

Accordingly, the TADF detector will simply measure according to the TADF measurement procedure, which may result in a first TADF emission pattern (e.g. output at the respective CCD array) without exposure to gravitational radiation.

Thus, the first TADF emission pattern, e.g. the TADF emission pattern when no gravitational radiation or a gravitational wave reaches the TADF detector may be measured when the generator device assembly is "switched off".

Optionally, a process called "calibration" may be carried out, e.g. to calibrate the TADF detector.

As such, the TADF detector may be placed in a certain region, e.g. in a laboratory. Then, measurements with the TADF detector are carried out, i.e. according to the "TADF measurement procedure" for a certain time of, e.g. 3 days. This allows to measure the TADF emission patterns over time. The respective TADF emission patterns may be recorded using a CCD detector or CCD array. Since these emissions are recorded over time, it may be possible receive information on how the TADF emission pattern will behave with respect to the background radiation over time, i.e. all the radiation that is present within the, e.g. laboratory such as gravitational radiation, electromagnetic radiation, neutrinos etc. Knowledge about the TADF emissions behavior with respect to the background radiation affecting the same may be used to determine statistical values, such as a mean average background radiation.

As generally applied in the field of detector physics, the determine average or background radiation that has been determined during calibration of the TADF detector, e.g. during the 3 days, may be removed, subtracted, withdrawn, or deducted such that further measurements may yield a greater accuracy.

That way, higher amounts (e.g. of higher energy, frequency or wavelength) of a signal, e.g. an artificially generated gravitational signal may be more easily detectable, e.g. due to the fact that the background radiation part of the TADF emission pattern has been removed from such measurements.

Once the background radiation or the average radiation has been removed, the TADF detector may be considered a "calibrated TADF detector".

The first TADF emission pattern, e.g. a TADF emission pattern without exposure to gravitational waves may correspond to the TADF emission pattern of a "calibrated TADF detector".

The term "exposure" as used throughout the present disclosure may be understood in that the TADF detector, the TADF emission pattern and/or the TADF material in the detection layer will be arranged within the focus area such that gravitational radiation may be reaching, affecting, influencing, penetrating, impacting, interacting with the TADF detector, the TADF emission pattern and/or the TADF material, e.g. when such a signal is provided.

The TADF material may thus have a first TADF emission pattern, e.g. a calibrated TADF emission pattern, when gravitational radiation doesn't reach, influence affect, impact or interact with the TADF emission pattern.

The first TADF emission pattern, e.g. when no gravitational signal is present, may be detected using the radiation detector device, e.g. the CCD camera.

The respective output of such measurements may be visualized using a two-dimensional CCD array of, e.g.

having 240x160 pixels being spaced in the x-y plane, while the z-axis provides e.g. 14 bit brightness values for every pixel.

For example, when the first TADF emission pattern is recorded, the output that is visible in the CCD array may correspond to a photon distribution that may be considered, e.g. uniformly distributed. In other words, each pixel in the CCD array may have substantially the same z-axis (e.g. brightness) value. As such, the first TADF emission pattern may correspond to photons having, e.g. an even, uniform, or regular distribution of brightness values of the TADF photons that is visible in the CCD array.

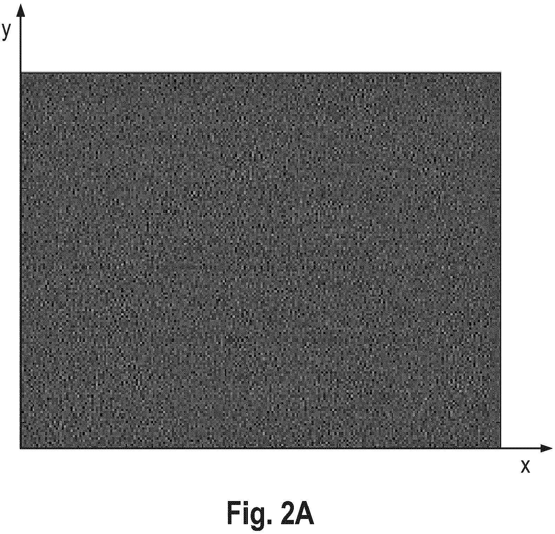

An example output of a first TADF emission pattern at a CCD array will be discussed in relation to Fig. 2A.

The TADF material may also have a second TADF emission pattern, e.g. when gravitational waves or gravitational radiation being generated or provided by the generator device assembly reach the TADF detector or the TADF material.

Thus, the second TADF emission pattern, e.g. the TADF emission pattern when gravitational radiation or a gravitational wave reaches the TADF detector may be measured when the generator device assembly is "switched on".

As such, the EM source assembly will start providing electromagnetic radiation and, consequently, the generator device assembly will provide gravitational radiation, e.g. in the direction of the TADF detector, such that TADF detector and, particularly, the first TADF emission pattern, e.g. the calibrated TADF emission pattern, will be exposed, affected or impacted by the gravitational radiation.

This directly results in the second TADF emission pattern, as the output on the CCD array (e.g. the first TADF emission pattern) directly changes, i.e. due to the additional presence of/exposure to the gravitational radiation by the generator device assembly.

The gravitational radiation reaching the TADF detector, may interact with the first TADF emission pattern, e.g. causing a change, deviation or a deformation of the photon distribution that is directly visible in the CCD array, e.g. changing/altering the brightness values.

The second TADF emission pattern may be also recorded using the same CCD array, e.g., also 240x160 pixels distributed in the x-y-plane while the z-axis provides, e.g. also 14 bit brightness values for every pixel.

The z-values (brightness values) of the first TADF emission pattern may change in that a different photon distribution is observed in the CCD output.

As such the impact of the gravitational radiation provided by the generator device assembly can be directly "seen" in the CCD array, e.g. "upon switching on", since the gravitational radiation directly changes or alters the output of the CCD array, e.g. the first or calibrated TADF emission pattern, e.g. the resulting brightness values at each pixel.

However, since the gravitational radiation may be controlled, e.g. in terms of radiation characteristics and/or radiation signal pattern as mentioned above, the output caused in the TADF detector, e.g. the same may also be "visible" or detected in the second TADF emission pattern in the CCD array.

Since the first and the second TADF emission patterns may be compared and analyzed by the computing device, e.g. using data analysis, the TADF detector may output a respective signal, e.g. a feedback signal as mentioned above that is indicative of gravitational radiation being present (or not).

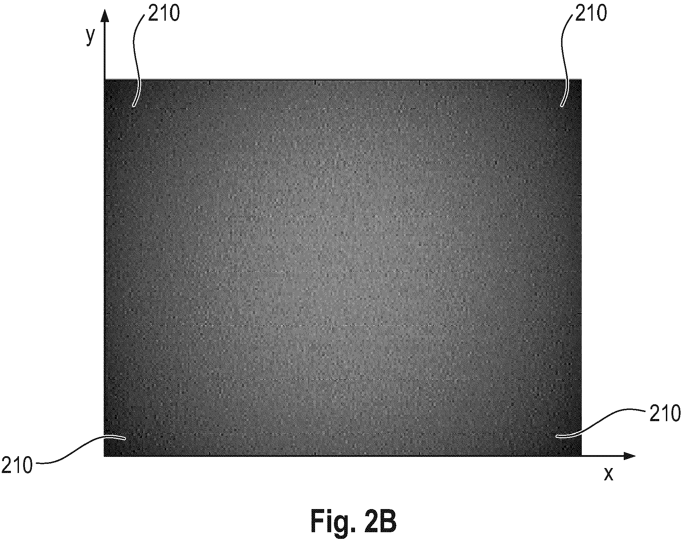

An example output of a second TADF emission pattern at a CCD array is discussed in relation to Fig. 2B. For example, to determine radiation characteristics form such measurements, a time series of CCD images outputted by a CCD array may be analyzed, to determine, e.g. a frequency, a wavelength, energy etc. or a radiation signal pattern.

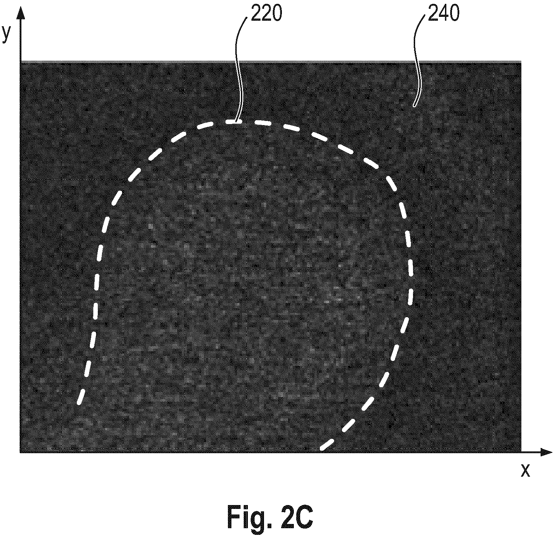

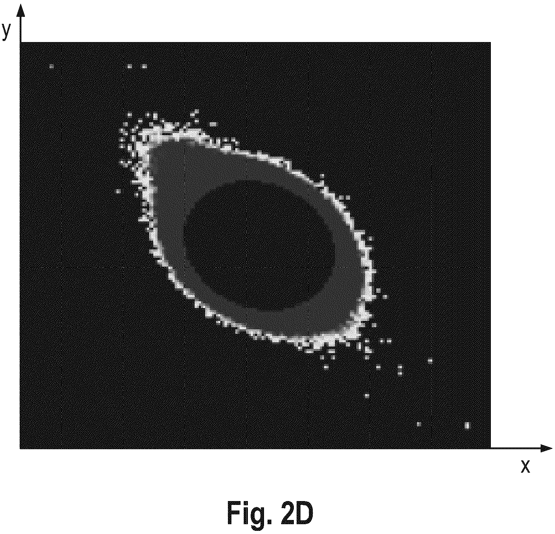

Furthermore, Figs. 2C and 2D show a TADF emission pattern at a CCD array when a "strong" or a "weak" gravitational signal is present.

A "strong" gravitational signal may correspond to 100% power of the apparatus and/or the generator device assembly, e.g. 100% of available input power, e.g. of the EM source assembly. A "weak" or "weaker" gravitational signal may be understood in less than 100% power of the apparatus and/or the generator device assembly, e.g. only 25% of input power, e.g. of the EM source assembly. In Figs. 2C and 2D, the distance between the transmitter (e.g. generator device assembly) and receiver (e.g. feedback sensor assembly) may be constant, e.g. unchanged or e.g. not varied.

In general, TADF material is temperature sensitive and, as a result, has temperature dependent TADF emission. Therefore, a thermal calibration method may be used to compensate temperature related effect.

For example, the whole TADF detector may be set up in a thermally controlled thermal chamber, in which the temperature is controlled to change from a low/minimum level to a high/maximum level, preferably with constant speed. The temperature may be changed so slow that, inside the thermal chamber, a quasi thermal equilibrium is achieved. For example, the temperature change may be such that the time constant(s) of the thermal calibration method is(are) smaller than dynamics of the thermal chamber of the thermal calibration setting. For example, in some cases the time constant of the thermal calibration method can be in the range of about two seconds and measuring time constant of the thermal calibration setting can be in the range of about two minutes. As further example, the thermal dynamics of the thermal calibration setting can be a thermal change in the range of about 20 °C in about one hour.

The above temperature change process may carried out once or may be repeated for two or more different temperature change profiles (e.g. different constant speeds, stepwise including using different step sizes). Experiments have shown that one or more temperature change processes lasting about five to seven hours provide a good basis for thermal calibration.

Also, a method for influencing at least one of a rate of a chemical reaction and/or a biological process and/or a phase transition process is provided, the method comprises:

providing electromagnetic radiation with a EM source assembly,
guiding the electromagnetic radiation with a guiding device to a magnetic field, the magnetic field being perpendicular to a guiding direction of the electromagnetic radiation,
providing a focus area in which a gravitational signal is outputted upon the interaction of the electromagnetic radiation with the magnetic field,
arranging the probe including the at least one chemical reaction at least partially within the focus area.

The gravitational radiation maybe provided at least during a first time, e.g. during which the experiment is performed, e.g. 12 hours, 24 hours, 36 hours, 72 hours, 108 hours etc.

The method may further comprise controlling radiation characteristics and/or radiation signal pattern of the gravitational signal by controlling the radiation characteristics and/or the radiation signal pattern of the electromagnetic radiation of the EM source assembly.

The radiation characteristics of the electromagnetic radiation include

- a frequency;
- an amplitude;
- an intensity;
- an energy;
  and the radiation signal pattern of the electromagnetic radiation include provision of the electromagnetic radiation
- constantly;
- in a reoccurring manner;
- repeatedly;
- pulsed;
- periodic or quasi-periodic;
- gradually increasing or decreasing;
- divided by an arbitrary time series of values.

The method may further include comparing the probe that is arranged in the focus area with a control sample that is equal to the probe in order to determine the effect of the gravitational radiation provided.

Furthermore, a method for influencing at least one of a rate of a chemical reaction and/or a biological process and/or a phase transition process, the method comprising

providing gravitational radiation in the form of gravitational waves with a generator device assembly, in a first focus area,
detecting the gravitational radiation with a feedback sensor assembly arranged at least partially within the first focus area to provide at least one feedback signal,
controlling the provision of gravitational radiation of the generator device assembly in dependence of the at least one feedback signal to controllably influence the rate of the at least one chemical reaction and/or the biological process and/or the phase transition process.

**BRIEF DESCRIPTION OF THE DRAWINGS**

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1    illustrates a schematic view of an example apparatus or generator device assembly according to embodiments described herein;

FIG. 2    illustrates a schematic view of an example feedback sensor assembly in the form of a TADF detector according to embodiments described herein;

FIG. 2A    illustrates the output of a first (e.g. calibrated) TADF emission pattern from a TADF detector at a CCD array;

FIG. 2B     illustrates the output of a second TADF emission pattern from the TADF detector at a CCD array; compared to the first (e.g. calibrated) TADF emission pattern;

FIG. 2C     illustrates the output of a second TADF emission pattern from the TADF detector at a CCD array when a "weak" gravitational signal is present;

FIG. 2D     illustrates the output of a second TADF emission pattern from the TADF detector at a CCD array when a "weak" gravitational signal is present;

FIG. 2E     illustrates the different processes of fluorescence emission, phosphorescence emission and thermally activated delayed fluorescence emission that may occur in, e.g., a TADF material.

FIG. 3     illustrates system according to embodiments described herein having at least one generator device assembly, and a feedback sensor assembly including multiple feedback sensors;

FIG. 4     illustrates a schematic view of a system according to embodiments described herein having a generator device assembly including two generator devices, and a feedback sensor assembly including four feedback sensors;

FIG. 5     illustrates an (unfiltered) response at a feedback sensor assembly when using a photodiode, e.g. a (1D) signal pattern (e.g. a first and a second TADF emission pattern) in dependence of electromagnetic radiation being input at a EM source assembly of a generator device assembly, e.g. in dependence of a gravitational signal;

FIG. 6     illustrates a (filtered) response at a feedback sensor assembly when using a photodiode, e.g. a (1D) signal pattern (e.g. a first and a second TADF emission pattern) in dependence of electromagnetic radiation being input at a EM source assembly of a generator device assembly, e.g. in dependence of a gravitational signal;

FIG. 7     illustrates a flow diagram of a method according to embodiments described herein;

FIG. 8     illustrates a flow diagram of a method according to embodiments described herein.

## DETAILED DESCRIPTION

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

The drawings are schematic drawings which are not drawn to scale. Some elements in the drawings may have dimensions which are exaggerated for the purpose of highlighting aspects of the present disclosure and/or for the sake of clarity of presentation.

Known conventional components, which are necessary for operation, (e.g. energy supply, cables, controlling devices, processing devices, storage devices, etc.) are neither shown nor described, but are nevertheless considered to be disclosed for the skilled person.

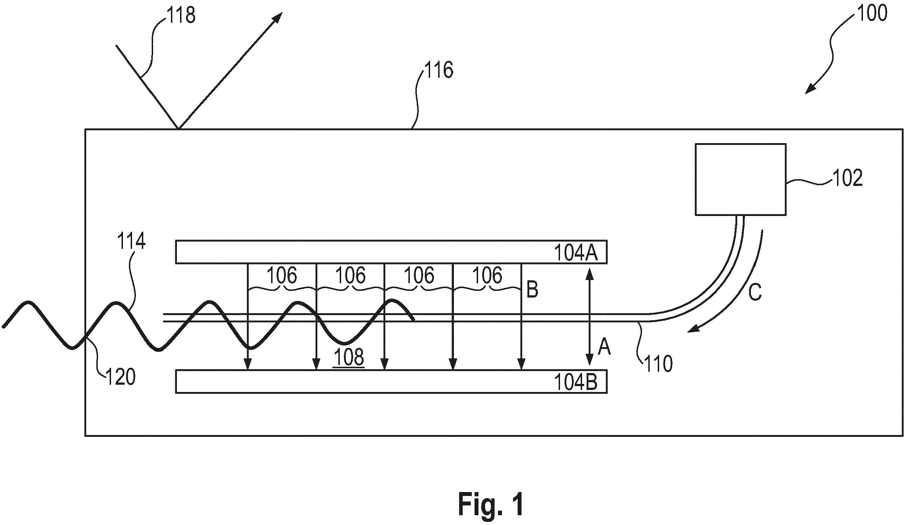

Fig. 1 shows an apparatus 100.

The apparatus 100 comprises a computing device (not shown) and a EM source assembly 102. The EM source assembly includes, e.g., two, LEDs and each being configured to provide electromagnetic radiation, e.g. photons, having a first wavelength of, e.g., 470 nm and/or 525 nm. In this case, two LEDs are used to provide different radiation signal patterns, such as a pulsed radiation signal pattern for example.

The apparatus 100 further comprises a magnetic assembly 104 configured to provide a magnetic field B. The direction of the magnetic field B is indicated by arrows 106.

The apparatus also includes a signal-generation region 108 being located in between the distance, gap, or spacing A between the two magnets 104A, 104B or the magnetic poles 104A and 104B of the magnetic assembly 104.

The apparatus 100 further comprises a guiding device 110 being coupled to the EM source device 102. The guiding device 110 may be a light pipe or light tube, e.g. a tube to transport electromagnetic radiation (e.g. light) of the EM source assembly 102.

As shown in Fig. 1, the light tube 110 is positioned in between the spacing A of the magnet assembly 104, i.e. to cross or traverse the magnetic field B between the magnetic poles 104A and 104B. As such, the magnetic field B provided by the magnetic assembly 104 may interact with the light transported in the light tube 110.

As mentioned, the "coupling" between the guiding device 110 and the EM source device 102 does not require a physical attachment or fixation to the EM source device 102 but merely requires that the electromagnetic radiation, e.g. the light generated by the EM source device 102 may enter the light tube 110. However, this does not exclude a physical attachment. In particular, the term "coupling" as used throughout the present disclosure with respect to the guiding device 110 and the EM source device 102 should be understood in enabling the electromagnetic radiation provided by the EM source device 102 to enter the guiding device 110.

The light tube 110 is configured to guide or transport the electromagnetic radiation provided by the laser 102 along a guiding direction C that follows the curvature, shape, trajectory or dimension of the light tube, which allows to transport the photons created by the laser 102 into the magnetic field region, e.g. into the spacing A where a gravitational signal is generated, e.g. at the signal-generation region 108.

The apparatus 100 includes a signal-generation region 108 which essentially corresponds to the size of the magnet assembly 104, since the gravitational signal is generated when both the magnetic field B and the photons from the laser 102 interact.

As shown in Fig. 1, the magnetic field B in the signal-generation region 108 is being provided substantially perpendicular to the light tube 110 (e.g. and the electromagnetic radiation therein), i.e. in order to be able to generate a gravitational wave 114 according to the Gertsenshtein effect.

The apparatus 100 further comprises a housing 116 having shielding properties for shielding, e.g., electromagnetic radiation, from reaching the inner components, e.g. the magnetic assembly 104, the guiding device 110 etc. located inside the housing 116, i.e. as indicated by arrow 118.

Contrary thereto, the gravitational wave 114 generated is able to penetrate the housing 116 as indicated by arrow 120.

Fig. 2 shows a schematic view of an example feedback sensor assembly 200 in the form of a TADF detector 200.

Fig. 2 schematically illustrates a TADF detector for detection of gravitational waves 114 generated by a generator device assembly 100.

The TADF detector 200 comprises a computing device 202 and a detection layer 204. As illustrated, the TADF detector 200 comprises two detection layers 204A, 204B. However, it is also possible to equip the TADF detector 200 with only one detection layer.

The detection layer comprises thermally activated delayed fluorescence TADF material, i.e. a material that is able to generate thermally activated delayed fluorescence emission when the TADF material is excited, e.g. by photons, from the $S_0$ state to an energetically higher state, e.g. the $S_1$ state.

Upon excitation with an excitation frequency in the TADF material in the detection layer will exhibit a thermally activated delayed fluorescence TADF emission.

The TADF detector comprises an excitation radiation source device 206. As illustrated, the excitation radiation source device 206 may be a lamp, or a LED that is adapted to emit excitation radiation 208, i.e. photons 208. The photons 208 may have at least a frequency that is within in the excitation frequency range of the excitation material, i.e. a frequency that is at least able to excite the TADF material from the $S_0$ state to an energetically higher state, e.g. the $S_1$ state.

The excitation radiation source device 206 can be controlled to provide continuous excitation radiation, i.e. to be operated in a constant emission mode. The excitation radiation source device 206 can be controlled to provide non-continuous excitation radiation, i.e. to be operated in a variable emission mode, to provide, for example, pulsed and/or periodical excitation radiation. Controlling the operation of the excitation radiation source device 206 is helpful in order to carry out the TADF measurement procedure. A controlling device may also be used to do so.

The excitation radiation source device 206 can comprise one or more excitation radiation sources, for example, one or more LEDs. The drawings show a single excitation radiation source device 206. However, two and more excitation radiation source devices, e.g. arranged adjacent to each other, opposite to each other or, e.g., spaced apart from each other can be employed.

The TADF detector comprises at least one radiation detector device. In the example of Fig. 2, the TADF detector comprises two radiation detector devices 210 communicatively coupled with the computing device 202.

The radiation detector device 210 may be a CCD device, CCD array, CCD camera, a photodiode or any other, e.g. optical, detector that is capable of detecting (at least) the photons provided by the detection layers 204A, 204B, particularly resulting from thermally activated delayed fluorescence emission from the TADF material, i.e. in response to excitation by excitation radiation from the LED 206.

As such, the radiation detector devices, e.g. the CCD arrays should be at least sensitive to detect thermally activated delayed fluorescence emission and the resolution of such a CCD array should be chosen to image or visualize the TADF emission.

The radiation detector device 210 can have a planar detection surface, or, for example, a curved detection surface. The same applies to the detection layer 204A, 204B.

The size and form of the detection surface of the radiation detector device 210 can be designed such that it conforms the size and form of a detection layer's emission surface from where TADF emission is emitted. This allows capturing and detecting as much TADF emission photons from the detection layer as possible.

The detection layer may have a single TADF emission surface or may have two or even more emission surfaces.

The radiation detector device 210 is capable of outputting detection data indicating radiation, e.g. photons resulting from TADF emission that are detected by the radiation detector device, e.g. the CCD array.

In addition or as alternative, one or more optical systems, e.g. a lenses (concave, convex or a combination), can be arranged between the detection layer 204A, 204B and the radiation detector devices 210 in order to, e.g. focus the direction of the TADF emission 212 onto the radiation detector device 210, e.g. to avoid losing information of the TADF emission 212.

The radiation detector devices 210 being adapted to detect TADF emission(s) from the detection layer 204A, 204B and provide respective detection data to the computing device 202.

The TADF detector may also comprise a housing 216.

The housing 216 may be adapted to act as at least one of the following:

- optically non-transparent shield,
- thermal shield,
- electromagnetic shield,
- shield against at least one of UV radiation, gamma radiation, corpuscular radiation, X-rays, alpha radiation, beta radiation.

The material of the housing 2166 may comprise, for example, at least one of the following:

- metal (e.g. for optically non-transparent shielding),
- plastic (e.g. for optically non-transparent shielding),
- gas gap and/or low thermal conductivity polymers (e.g. for thermal shielding),
- multi layered construction including layers of different material, for example alternating layers of material having low and high thermal conductivity, like copper foil, (e.g. for thermal shielding),
- low thermal conductivity material, like polymer, (e.g. for thermal shielding),
- closed (e.g. complete and/or hermetic) grounded metal coating (e.g. Al, Cu) (e.g. for electromagnetic shielding)

UV/gamma/corpuscular/X-rays/ alpha/beta shield:

- Aluminum (e.g. for shielding of at least one of UV radiation, gamma radiation, corpuscular radiation, X-rays, alpha radiation, beta radiation),
- glass (e.g. for shielding of at least one of UV radiation, gamma radiation, corpuscular radiation, X-rays, alpha radiation, beta radiation),
- textolite (e.g. for shielding of at least one of UV radiation, gamma radiation, corpuscular radiation, X-rays, alpha radiation, beta radiation),
- concrete (e.g. for shielding of at least one of UV radiation, gamma radiation, corpuscular radiation, X-rays, alpha radiation, beta radiation).

An exemplary housing may have walls comprising an Aluminum sheet/layer with a thickness of at least about 10 mm; one, two or three glass layers each having a thickness of at least about 2 mm; a textolite layer with a thickness of about 1 mm with an optional cooper foil at least at one side of the textolite layer.

The distance between the inner surface of the housing 216 and the detection layer 204A, 204B may be 0 mm (i.e. no distance) or, for example, in the range of at least about 30 mm.

Further shielding can be achieved by providing a housing that - in addition to at least one of the above-mentioned examples or as option thereto - is made of concrete and completely surrounds the TADF detector. This can be accomplished by, for example, positioning the TADF detector in a hollow concrete cube having concrete walls with a thickness of, e.g., about 3 meters and more.

The excitation radiation source device 206 may be controlled to emit photons 208 that reach the TADF material in the detection layer 204A, 204B which will consequently be excited and exhibit TADF emission that may be measured according to the TADF measurement procedure set forth above.

FIGS. 2A-2D illustrates two-dimensional (2D) representations of TADF emission patterns at a CCD array.

Fig. 2A illustrates an example output of a first, calibrated TADF emission pattern from a TADF detector at a CCD array. The respective output of such measurements may be visualized using a two-dimensional CCD array of, e.g.

having 240x160 pixels being distributed in the x-y plane, while the z-axis provides, e.g. 14 bit brightness values for every pixel.

As can be seen in the example of Fig. 2A, the x-y plane, e.g. defined by the x-axis and the y-axis includes, e.g. 240x160 pixels. The z-axis value may include information about the brightness detected at every pixel. The darker pixels may correspond to less brightness values of the TADF photons while the brighter pixels may correspond to higher brightness values of the TADF photons. As can be seen, the brightness values are evenly or uniformly distributed over the entire detection area of the CCD array, e.g. the x-y-plane. As such, a uniform, regular or even photon distribution having uniformly, regularly or evenly distributed brightness values in the x-y plane is determined when the generator device assembly is "switched off", i.e. no gravitational radiation is provided.

Fig. 2B illustrates an example output of a second TADF emission pattern from the TADF detector at the CCD array mentioned above, e.g. Fig. 2B shows how the first (e.g. the calibrated) TADF emission pattern changes when gravitational radiation is present.

As can be seen in the example of Fig. 2B, the second TADF emission pattern is different from the first TADF emission pattern, particularly deformed, bent, shifted, focused and affected by the gravitational radiation. In particular, the outer pixels at the edges 210 may have brightness values that are, e.g. decreased as compared to Fig. 2A. While the pixels towards the center may have brightness values, e.g. having increased as compared to Fig. 2A.

However, in order to determine radiation characteristics and/or radiation signal pattern from such measurements, a time series of CCD images, e.g. detect multiple CCD images outputted by the CCD array over time, may be analyzed to determine, e.g. a frequency, a wavelength, energy etc. or a radiation signal pattern.

Fig. 2C illustrates the output of a second TADF emission pattern from the TADF detector at a CCD array when a "weak" gravitational signal is present. A "strong" gravitational signal may correspond to 100% power of the apparatus and/or the generator device assembly, e.g. 100% of available input power, e.g. of the EM source assembly. A "weak" or "weaker" gravitational signal may be understood in less than 100% power of the apparatus and/or the generator device assembly, e.g. only 25% of input power, e.g. of the EM source assembly. In Figs. 2C and 2D, the distance between the transmitter (e.g. generator device assembly) and receiver (e.g. feedback sensor assembly) may be constant, e.g. unchanged or e.g. not varied. This allows to "visualize" the change in input power, e.g. at the output of the feedback sensor.

As can be seen, the brightness value in the CCD image at every pixel (e.g. in a center region of the CCD image which is indicated in Fig. 2C by being surrounded by the dashed contour/envelope 220) is only slightly increased as compared to the outer pixels 240. However, as compared to a (e.g. calibrated) TADF emission pattern, e.g. as in Fig. 2A, increased brightness values at the pixels in the center may be observed.

Fig. 2D illustrates the output of a second TADF emission pattern from the TADF detector at a CCD array when a "strong" gravitational signal is present. The black area in the center of the CCD image illustrates an overflowing area, e.g. the brightness values that may not fit in the, e.g., 14 bit brightness pixel size of the pixels.

Data analysis techniques may be used for the output to determine, for example, radiation characteristics and/or radiation signal pattern of the gravitational radiation.

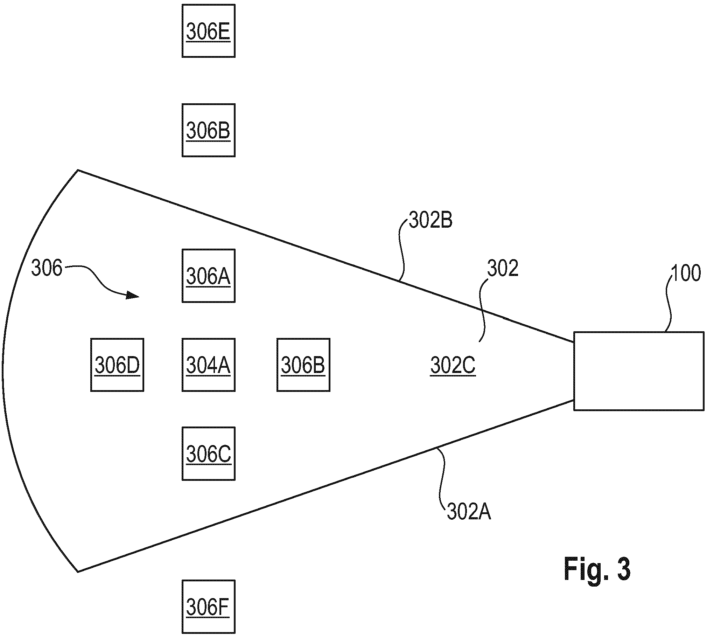

Fig. 3 illustrates a system 300 according to embodiments described herein having at least one generator device assembly 100, e.g. in the form of an apparatus 100 as mentioned above, and a feedback sensor assembly 200 including multiple feedback sensors 200, e.g. in the form of TADF detectors.

Fig. 3 illustrates a system 300 to influence at least one chemical reaction and/or a biological process.

The system 300 comprises a generator device assembly 100, e.g. a generator device assembly using the Gertsenshtein effect for providing gravitational radiation. The gravitational radiation may be provided in a focus area 302. The focus area 302 may have a starting point 302A, an endpoint 302B and a radiation area 302C therebetween in which gravitational radiation is being provided. As can be seen in Fig. 3, the focus area 302 may have a conus shape.

The system 300 further includes a probe or sample 304A that is depicted to be fully covered by the focus area 302, e.g. located completely within the radiation area 302, and a control sample 304B located outside the focus area 302, e.g. not affected by gravitational radiation in the focus area 302.

However, the probe 304A may also be arranged only partially inside the focus area 302 such that parts thereof are inside the focus area 302, e.g. and thereby affected by the gravitational radiation, and parts thereof are outside the focus area 302, e.g. and thereby not affected by the gravitational radiation.

The probe 304A under investigation may include at least one chemical reaction and/or at least one biological process and/or at least one phase transition process that may be influenced by radiation, e.g. gravitational radiation 114, provided by the generator device assembly 100. The control sample 304B may include the same at least one chemical reaction and/or at least one biological process and/or at least one phase transition process.

In other words, the control sample 304B may be equal to the probe 304A under investigation with the only difference that the control sample is not to be influenced by gravitational radiation. For example, the probe 304A and the control sample may include the same sort of plant or seed or the same solution for crystal formation.

As depicted, the probe 304B and the control sample 304A are arranged such that at a distance or spacing between probe 304A and control sample 304B is provided which may be, for example, 15cm. However, any suitable spacing may be chosen.

The example system 300 illustrated in Fig. 3 may further include a feedback sensor assembly 306 including, e.g., four feedback sensors 306A, 306B, 306C and 306D, each in the form of, e.g., a TADF detector as illustrated in Fig. 2. A feedback sensor assembly or one or more feedback sensors may be optional for the system.

As illustrated in Fig. 3, the TADF detectors 306A-306D are arranged in the vicinity of the probe 304A spaced apart at an angle of approximately 90°. However, this is just for illustration purposes, i.e. any suitable spacing, angle, number of TADF detectors may be chosen. Also, the TADF detectors 306A-306D are arranged to be at least partially within the focus area 302, e.g. in order to be affected by the gravitational radiation, e.g. the gravitational radiation 114, provided by the generator device assembly 100.

Each of the TADF detectors 306A-306D may be a calibrated TADF detector and is able to provide a feedback signal in response to detecting the gravitational radiation 114 generated by the generator device assembly 100.

In other words, the (calibrated) TADF detectors 306A-306D and particularly the TADF emission pattern will be impacted, affected, influenced by the gravitational radiation 114.

This results in the TADF detectors 306A-306D each providing a TADF emission pattern with exposure to gravitational radiation 114. These TADF emission patterns may be detected by the radiation detector devices within the TADF detectors 306A-306D that provide detection data, i.e. this information, to the computing device (not shown) for analysis.

As mentioned, the computing device (not shown) of the example system 300 of Fig. 3 may be coupled to the generator device assembly 100 and the feedback sensor assembly 306A-306D. The computing device may control, e.g. in dependence of (e.g. one or more of) the feedback signals of the TADF detectors 306A-306D, e.g. the detection data detected by the respective radiation detector devices, e.g. the CCD arrays therein that include information of the first and second TADF emission pattern that is or is not affected by gravitational radiation, the provision of gravitational radiation of the generator device assembly 100.

Controlling the generator device assembly 100 may include varying the radiation characteristics and/or the radiation signal pattern in dependence of the one or more feedback signals.

For example, the initial wavelength, e.g. 470nm or 525 nm, of the electromagnetic radiation provided by the EM source assembly 102 may be controlled, e.g. in order to, correspondingly, control and/or change the wavelength of the corresponding gravitational radiation 114, by which the probe 304A can, consequently, be controllably influenced.

The control sample 304B may not be influenced thereby since it is located outside the focus area 302.

As mentioned above, not only the wavelength of the photons provided by the EM source device 102 may be changed, but also the frequency, amplitude, intensity, energy etc. e.g. the radiation characteristics and/or the radiation signal pattern, e.g. pulsed, constant, periodic (e.g. sinusoidal etc.), chaotic, reoccurring etc.

This allows to have a controlled, customized or selected impact or influence on the probe 304A under investigation and, particularly on the at least one chemical reaction and/or the biological process.

The probe 304A under investigation may then be influenced for a certain time, e.g. a first time of hours, days, weeks etc. (e.g. as long as the experiment is to be carried out) while the control sample 304B will not be influenced.

After this time, the probe 304A may compared to the control sample 304B to determine the differences therebetween, e.g. to determine how fast/slow the rate of the at least one chemical reaction and/or the biological process changed (e.g. a growth rate) or, e.g. how the structure, form, shape of the probe has changed. These differences may be related to the influence of the gravitational radiation that has affected, impacted or altered the probe 304A.

Optionally, as further shown in Fig. 3, the feedback sensor assembly 306 may include one or more additional feedback sensors 306E and 306F that may be located outside of the focus area 302, e.g. for constantly measuring the background radiation. Consequently, the information provided by the TADF detectors 306E and 306F may serve to enhance the measurements, e.g. in terms of accuracy and also serve to crosscheck, verify the results.

As mentioned above, a chemical reaction follows the Arrhenius equation. As such, small change of, e.g. energy, for the particles involved in a chemical reaction, e.g. the initial reactants, may result in a change of the process, e.g. and possible the outcome, i.e. the final products. Such change in energy may, be provided thermally, i.e. by varying temperature T or pressure P or a concentration etc. as discussed above, or by impact of non-ionizing radiation, such as gravitational radiation. This means that by providing gravitational radiation 114 to a chemical reaction in a controlled way, e.g. by using a generator device assembly 100 or an apparatus 100 as mentioned above, the chemical reaction may be correspondingly affected, influenced or impacted in a controlled way. The same applies to a biological process and/or a phase transition process.

The radiation provided seems to have an impact on the rate, i.e. the speed at which the chemical reaction or the biological process occurs, since an increase in the radiation level causes acceleration of reactions leading to a higher chance of mutations while a lower radiation level causes deceleration of reactions leading to a lower chance of mutations.

Experiments have shown that under periodic influence or regular, e.g. reoccurring impact, i.e. the speed or the rate of the reaction is accelerated or decelerated, periodically or regularly etc., such a change may have advantageous effects on the at least one chemical reaction and/or the biological process and/or the phase transition process.

Experiments were carried out using a total of three thermostats T1-T3, i.e. in which a constant temperature of T1=40°C, T2=37°C and T3=25°C was maintained during a time of 8 days in total, i.e. 8 days in which a gravitational radiation has been applied.

The gravitational radiation has been provided according to different radiation signal patterns, namely: E1) a continuous radiation signal pattern, E2) On/off modulation in the range of 0-16000 ms and E3) a harmonic modulation of the generator power ($P$ = sum($A_i$sin($\omega_i t$))) with $A_i$ being in the range of 10Hz and 1000Hz.

Each of the three thermostats T1-T3 included a probe under investigation including at least one chemical reaction, a biological process, a phase transition process etc. that has been arranged to be within the focus area of the gravitational radiation E1-E3 and, thus, influenced thereby as well as a control sample including the same at least one chemical reaction, biological process, phase transition process that has been arranged outside the focus area of the gravitational radiation E1-E3 and, thus, not influence thereby.

In thermostat T1 the probe under investigation and the control sample included seeds of legumes, e.g. seeds of beans and peas. After the duration of the Experiments and using radiation signal pattern E1, the germination energy, e.g. the number of seedlings after 5 days showed more than 150% percent increase as compared to the control sample. The maximum plant height showed more than 200% increase and the median height of plants (e.g. an average increase of all tested) showed more than 150% as compared to the control sample height.

Radish for example, shows a medium growth of 70% i.e. following E1 and even 120% in E3 as compared to the control sample.

In T3, a solution for crystal formation, e.g. a phase transition process from liquid to solid, was tested. Following E3, the crystal growth of the probe under investigation was drastically slowed or decelerated as compared to the control sample, e.g. during a 30 hour experiment, the crystal growth of the probe under investigation was even completely suppressed as compared to the control sample, in which the formation was as expected, e.g. not suppressed.

Using E2, the crystal formation was a lot more uniform/homogeniously as compared to the control sample, which was rather chaotically or inhomogen.

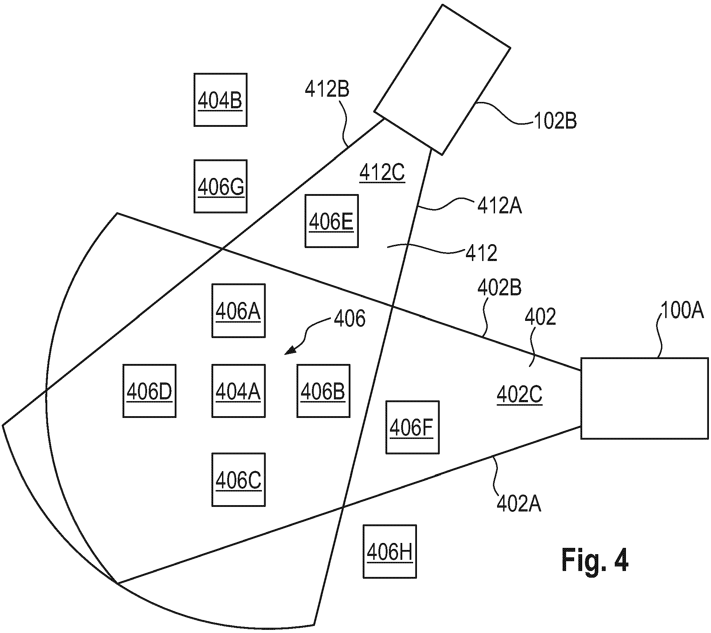

Fig. 4 illustrates system 400 according to embodiments described herein having at least one generator device assembly 100, and a feedback sensor assembly 200 including multiple feedback sensors 200. The feedback sensor assembly 200 may be optional to the system.

Fig. 4 illustrates a system 400 to influence at least one chemical reaction and/or a biological process and/or a phase transition process.

The system 400 comprises a generator device assembly 100, e.g. an apparatus 100 using the Gertsenshtein effect for providing gravitational radiation.

The generator device assembly 100 comprises a first generator device 100A that provides a first gravitational radiation in a first focus area 402 and a second generator device 100B that provides a second gravitational radiation in a second focus area 412. Generally, the focus areas 402 and 412 have the same features as mentioned above with respect to the focus area 302, e.g. each having a first end 402A, 412A a second end 402B, 412B and a radiation area 402C, 412C therebetween etc.

The first gravitational radiation may be equal to the second gravitational radiation with respect to radiation characteristics and/or radiation signal pattern, or different.

However, various variations with respect to radiation characteristics, e.g. frequency, wavelength, energy, intensity and/or variations with respect to radiation signal pattern, e.g. pulsed, reoccurring, periodic, constant etc. are possible.

As can be seen, the probe under investigation 404A is arranged to be within the first and the second focus areas 402, 412, while the control sample is located outside the first and the second focus areas 402, 412.

The feedback sensor assembly 406 includes four feedback sensors 406A-406D in the form of a TADF detector as illustrated in Fig. 2, wherein each feedback sensor 406A-406D is located inside both the first and the second focus area 402, 412 and in the vicinity of the probe 404B.

As can be seen in the example of Fig. 4, two optional TADF detectors 406E and 406F may be provided, wherein the first TADF detector 406E may provide a feedback signal indicative of the first gravitational radiation provided by the first generator assembly 102A and the second TADF detector 406F may provide a feedback signal indicative of the second gravitational radiation provided by the second generator assembly 102B.

Alternatively or in addition thereto, the system 400 may include TADF detectors 406G and 406H in order to detect a gravitational signal (e.g. background), for example in the vicinity of the control sample 404B and outside the first and second focus areas 402, 412.

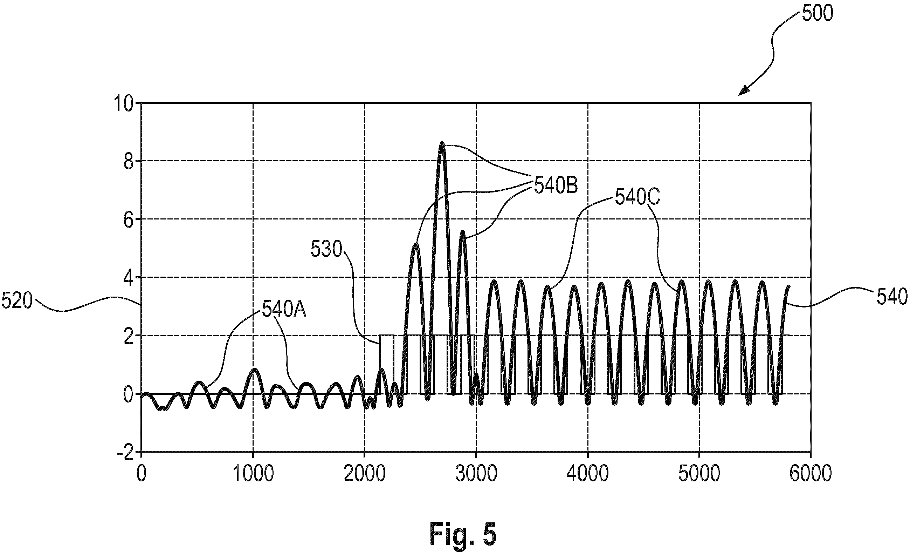

Fig. 5 illustrates an (unfiltered) response at a feedback sensor assembly (e.g. an output 500) when using a photodiode, e.g. a (1D) signal pattern (e.g. a first and a second TADF emission pattern) in dependence of electromagnetic radiation being input at a EM source assembly of a generator device assembly, e.g. in dependence of a gravitational signal.

The horizontal axis 510 of the output 500 illustrates time, e.g. in seconds, while the vertical axis 520 illustrates a signal level, e.g. a power of the signal. The rectangular or square-like signal 530 illustrates the electromagnetic radiation that is input to the EM source assembly, e.g. the light generated thereby. As can be seen, the light is generated in this example using a pulsed radiation signal pattern. The "sinusoidal-like" signal 540 illustrates the output in the Feedback sensor, e.g. the gravitational signal.

As can be seen, for a first time, e.g. the portion between approximately 0 and 2000 of Fig. 5, no electromagnetic radiation is generated by the EM source device. This results in no gravitational radiation being generated e.g. by the apparatus and/or the generator device assembly. Consequently, the TADF detector output of the, e.g. photodiode only measures background radiation 540A. This scenario may correspond to the first TADF emission pattern, when no gravitational signal is present but only background 540A. Fig. 5 represents only a 1 dimensional (1D) representation of the (first and second) TADF emission pattern.

For a second time, e.g. the portion above 200 in Fig. 5, the EM source assembly is "switched on" and "switched off" in e.g. a pulsed manner. This is indicated in Fig. 5 by the rectangular-like signal. Consequently, "switching on" the EM source assembly may result in electromagnetic radiation being generated, entering the guiding device, being guided to the signal-generation region where it interacts with a magnetic field to generate a gravitational wave. The same may be directed to the feedback sensor in order to measure how its output changes. As can be seen, when the gravitational signal is being generated, e.g. provision is indicated by the start of signal 530, the feedback sensor shows a reaction or response thereto indicated by the peak(s) 540B. Peaks 540B are slightly higher than gravitational signal peaks 540C. This may have several explanations. For example, according to linear time invariant (LTI) system theory, the receiver realization may include an adaptive algorithm for current background and signal-to-noise-ratio estimation. Dynamic behavior of such an algorithm may be describes as a linear time-invariant system of the second order with complex poles. The peaks 540B may result from an "overshoot" of the receiver output right after turning on the generator signal, e.g. the gravitational signal. Another explanation may result from radio-techniques. The receiver may be considered as a narrow band filter, e.g. tuned to the frequency of the generator. During the generator being in the "power on" of the generator, the signal may be non-stationary and its spectrum may have some additional harmonics which may distort the output of the receiver initially. In order to avoid such effects, a power ramp may be used, e.g. including "power-on ramp" and "power-down ramp". The peaks 540B and/or the peaks 540C may correspond to the second TADF emission pattern, when a gravitational signal is present.

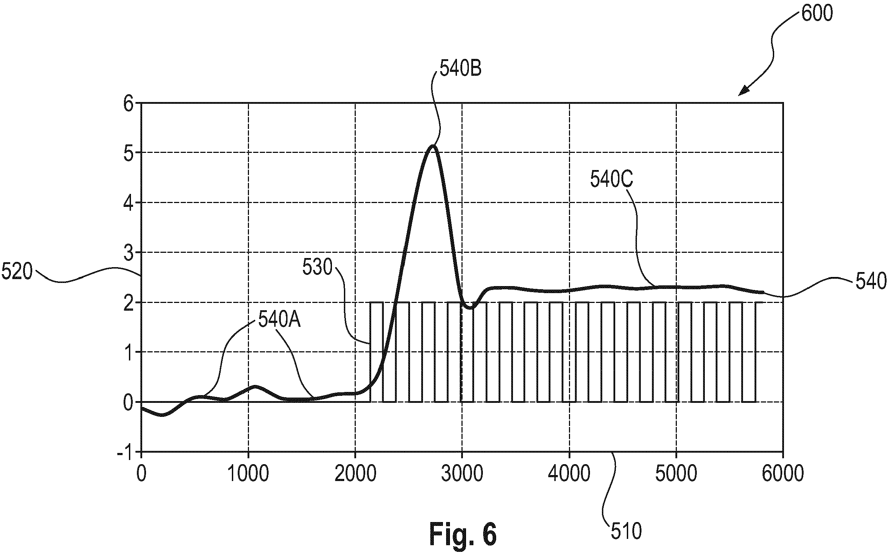

FIG. 6 illustrates a (filtered) response at a feedback sensor assembly (e.g. an output 500) when using a photodiode, e.g. a (1D) signal pattern (e.g. a first and a second TADF emission pattern) in dependence of electromagnetic radiation being input at a EM source assembly of a generator device assembly, e.g. in dependence of a gravitational signal. FIG. 6 may thus correspond to FIG. 5 with the only difference that the output of FIG. 5 is filtered.

For the output 600 of FIG. 6, an exponential moving average (EMA) filter was used, e.g. a calculation to analyze data points by creating a series of averages of, e.g. different, subsets of the data set. This may be used to "smooth out", e.g. to exclude, short-term irregularities or fluctuations and/or to highlight longer-term trends or cycles. FIG.6 illustrates that the initial higher response 540B of the feedback sensor when a gravitational signal is present (e.g. second TADF emission pattern, 1D), the background signal 540A (e.g. first TADF emission pattern, 1D) as well as the trend towards a proportional response 540C. For example, the proportional response may be regarded as approximately a constant ratio between input signal power (e.g. electromagnetic radiation) and output signal power (e.g. gravitational signal).

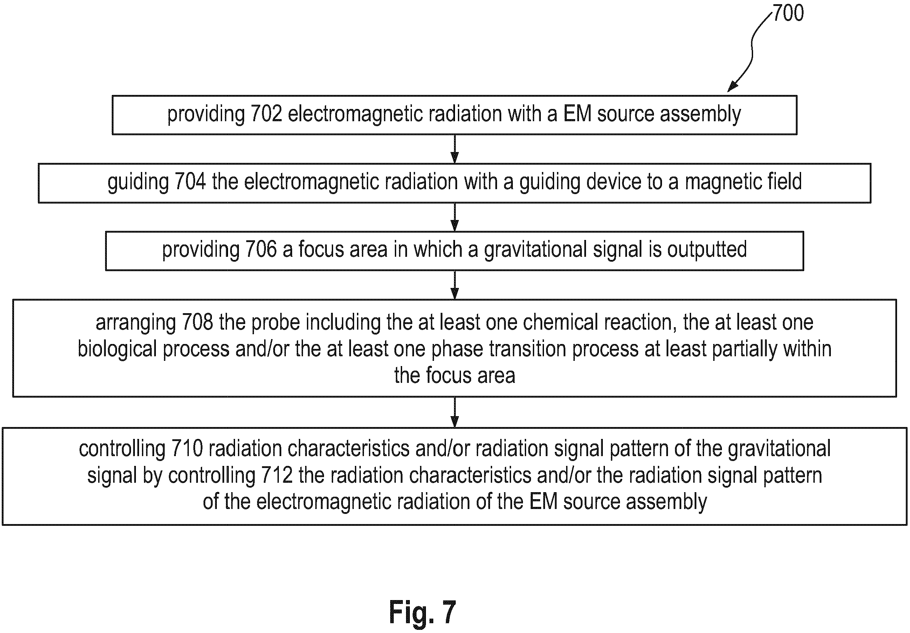

FIG. 7 illustrates a flow diagram 700 of a method for influencing a rate of at least one chemical reaction and/or a biological process and/or a phase transition process according to embodiments described herein.

The method 700 comprises:

providing 702 electromagnetic radiation with a EM source assembly,
guiding 704 the electromagnetic radiation with a guiding device to a magnetic field, the magnetic field being perpendicular to a guiding direction of the electromagnetic radiation,
providing 706 a focus area in which a gravitational signal is outputted upon the interaction of the electromagnetic radiation with the magnetic field,
arranging 708 the probe including the at least one chemical reaction, the at least one biological process and/or the at least one phase transition process at least partially within the focus area.

The gravitational radiation may be provided at least during a first time.

The method 700 may further comprise controlling 710 radiation characteristics and/or radiation signal pattern of the gravitational signal by controlling 712 the radiation characteristics and/or the radiation signal pattern of the electromagnetic radiation of the EM source assembly.

The radiation characteristics of the electromagnetic radiation include

- a frequency;
- an amplitude;
- an intensity;

- an energy;
  and the radiation signal pattern of the electromagnetic radiation include provision of the electromagnetic radiation
- constantly;
- in a reoccurring manner;
- repeatedly;
- pulsed;
- periodic or quasi-periodic;
- gradually increasing or decreasing;
- divided by an arbitrary time series of values.

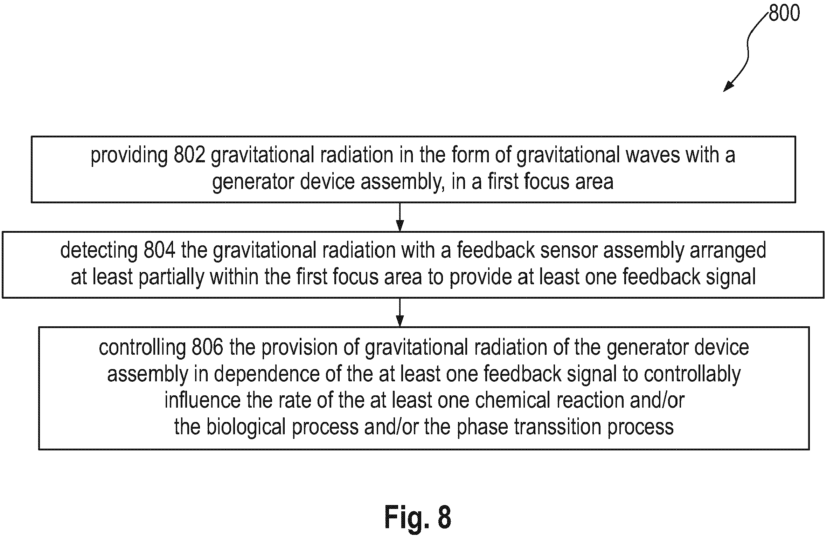

Fig. 8 illustrates a flow diagram 800 of a method for influencing a rate of at least one chemical reaction and/or a biological process and/or a phase transition process according to embodiments described herein.
The method 800 comprising

providing 802 gravitational radiation in the form of gravitational waves with a generator device assembly, in a first focus area,
detecting 804 the gravitational radiation with a feedback sensor assembly arranged at least partially within the first focus area to provide at least one feedback signal,
controlling 806 the provision of gravitational radiation of the generator device assembly in dependence of the at least one feedback signal to controllably influence the rate of the at least one chemical reaction and/or the biological process and/or the phase transition process.


**Claims**

1. Apparatus to influence at least one of a rate of a chemical reaction and/or a biological process and/or a phase transition process, the apparatus comprising:

   a computing device,
   a EM source assembly configured to provide electromagnetic radiation,
   a magnetic assembly configured to provide a magnetic field in a signal-generation region,
   a guiding device coupled to the EM source assembly,
   the guiding device being configured to guide the electromagnetic radiation provided by the EM source assembly along a guiding direction and into the signal-generation region,
   wherein the magnetic field in the signal-generation region being perpendicular to the guiding direction of the guiding device, and
   a focus area for outputting a gravitational radiation generated in the signal-generation region when the electromagnetic radiation of the EM source assembly interacts with the magnetic field provided by the magnet assembly, the focus area being directed to at least partially cover at least one of the chemical reaction and/or the biological process and/or the phase transition process.

2. Apparatus according to claim 1, further comprising a housing having shielding properties for shielding external radiation from reaching the EM source assembly, the magnetic assembly and/or the guiding device.

3. Apparatus according to claim 1, wherein the computing device controls radiation characteristics and/or a radiation signal pattern of the gravitational radiation by controlling radiation characteristics and/or a radiation signal pattern of the electromagnetic radiation provided by the EM source assembly.

4. Apparatus according to claim 3, wherein the radiation characteristics of the electromagnetic radiation include

   - a frequency;
   - an amplitude;
   - an intensity;
   - an energy;
   and the radiation signal pattern of the electromagnetic radiation include the EM source assembly providing the electromagnetic radiation
   - constantly;
   - in a reoccurring manner;

- repeatedly;
- pulsed;
- periodic or quasi-periodic;
- gradually increasing or decreasing;
- divided by an arbitrary time series of values.

5. Apparatus according to claim 3, wherein the magnetic assembly including a first magnet and a second magnet, the first magnet being mounted spaced apart from the second magnet to define a distance therebetween, and wherein the guiding device is being arranged within the distance between the first and the second magnet.

6. Apparatus according to claim 5, wherein the distance between the first magnet and the second magnet is less than 10 mm, the first and/or the second magnet including a neodymium magnet made from neodymium, iron and boron and the first and/or the second magnet providing a magnetic field of at least 0.5 T.

7. Apparatus according to claim 3, wherein the magnetic assembly includes one or more electromagnets.

8. Apparatus according to claim 1, wherein the EM source assembly includes one or more LED's for providing electromagnetic radiation, the electromagnetic radiation being photons having a wavelength in the range of 100-1000 nm, preferably a wavelength in the range of 450nm to 540nm.

9. Apparatus according to claim 1, wherein the guiding device being a light tube made from polycarbonate configured to transport the light provided by the EM source assembly along the guiding direction to reach the magnetic field provided by the magnet assembly.

10. System to influence at least one of a rate of a chemical reaction and/or a biological process and/or a phase transition process, the system comprising:

a generator device assembly for providing non-ionizing radiation in a focus area,
the non-ionizing radiation being gravitational radiation in form of gravitational waves, and
a probe including at least one of a chemical reaction and/or a biological process and/or a phase transition process, being arranged at least partially within the focus area.

11. System according to claim 10, wherein the generator device assembly includes one or more generator devices, the generator device assembly or the one or more generator devices including:

a computing device,
a EM source assembly configured to provide electromagnetic radiation,
a magnetic assembly configured to provide a magnetic field in a signal-generation region,
a guiding device coupled to the EM source assembly,
the guiding device being configured to guide the electromagnetic radiation provided by the EM source assembly along a guiding direction and into the signal-generation region,
wherein the magnetic field in the signal-generation region being perpendicular to the guiding direction of the guiding device, and
a focus area for outputting gravitational radiation generated in the signal-generation region when the electromagnetic radiation of the EM source assembly interacts with the magnetic field provided by the magnet assembly, the focus area being directed to at least partially cover the at least one of a chemical reaction and/or the biological process and/or the phase transition process.

12. System according to one or more of the preceding claims, the system further comprising a

control sample, the control sample including the same at least one of a chemical reaction and/or a biological process and/or a phase transition process as the probe,
the control sample being arranged outside the focus area.

13. System according to one or more of the preceding claims, further comprising
a feedback sensor assembly for detecting the gravitational radiation and for providing at least one feedback signal in response to the detection,
the feedback sensor assembly being arranged at least partially within the focus area and

a computing device coupled to the generator device assembly and the feedback sensor assembly for controlling the provision of gravitational radiation of the generator device assembly in dependence of the at least one feedback signal.

14. System according to claims 10-13, wherein the computing device controls the generator device assembly in providing the gravitational radiation on the basis of the feedback signal of the feedback sensor assembly in order to controllably influence at least one of the rate of the at least one chemical reaction and/or the biological process and/or the phase transition process.

15. System according to claims 10 or 11, wherein the generator device assembly comprises two generator devices, including
a first generator device configured to provide a first gravitational radiation in a first focus area to influence at least one of the rate of the chemical reaction, and/or a biological process and/or a phase transition process and
a second generator device configured to provide a second gravitational radiation in a second focus area to influence at least one of the rate of the chemical reaction and/or the biological process and/or the phase transition process.

16. System according to claim 15, wherein the computing device controls the first and/or the second generator device to provide the first gravitational radiation having radiation characteristics and/or radiation signal patterns being different form the radiation characteristics and/or radiation signal patterns of the second gravitational radiation.

17. System according to claim 16, wherein the computing device controls radiation characteristics and/or a radiation signal pattern of the first and/or the second gravitational radiation by controlling radiation characteristics and/or a radiation signal pattern of the electromagnetic radiation provided by the EM source assembly of the first and/or the second generator device.

18. System according to claim 13, wherein the feedback sensor assembly comprises two feedback sensors, including
a first feedback sensor configured to provide a first feedback signal indicative of a first gravitational signal, and
a second feedback sensor configured to provide a second feedback signal indicative of a second gravitational signal.

19. System according to claim 18, wherein the first and/or the second feedback sensor is being arranged at least partially within the focus area of the generator device assembly and in the vicinity of a probe including the at least one of the chemical reaction and/or the biological process and/or the phase transition process.

20. System according to claim 19, wherein the first and/or the second feedback sensor include a thermally activated delayed fluorescence (TADF) detector for detecting gravitational radiation provided by the generator device assembly, the first and/or the second TADF detector including
a computing device,
a detection layer comprising thermally activated delayed fluorescence TADF material, the thermally activated delayed fluorescence TADF material having an excitation frequency range and, exhibiting upon excitation with radiation in the excitation frequency range, a thermally activated delayed fluorescence TADF emission,
an excitation radiation source device adapted to emit excitation radiation in the excitation frequency range in order to excite the TADF material, the excitation radiation being electromagnetic radiation,
a radiation detector device communicatively coupled with the computing device, the radiation detector device being adapted to detect TADF emission from the detection layer and provide respective detection data to the computing device,
the TADF material having a first TADF emission pattern excited by the excitation radiation without exposure to gravitational radiation and a second TADF emission pattern excited by the excitation radiation, with exposure to gravitational radiation,

- the computing device being adapted to

- compute detection data from the radiation detector device to determine the first TADF emission pattern excited by excitation radiation without exposure to gravitational radiation and the second TADF emission pattern excited by the excitation radiation with exposure to gravitational radiation,
- compare the first and the second determined TADF emission patterns,
- determine, on the basis of the comparison, exposure to gravitational radiation and a gravitational signal in the detection layer.

21. System according to claim 15, further comprising a synchronization device to synchronize the first and the second generator device in providing the first and the second gravitational radiation.

22. Method for influencing at least one of a rate of a chemical reaction and/or a biological process and/or a phase transition process, the method comprising:

providing electromagnetic radiation with a EM source assembly,
guiding the electromagnetic radiation with a guiding device to a magnetic field, the magnetic field being perpendicular to a guiding direction of the electromagnetic radiation,
providing a focus area in which a gravitational signal is outputted upon the interaction of the electromagnetic radiation with the magnetic field,
arranging the probe including at least one of the chemical reaction and/or the biological process and/or the phase transition process at least partially within the focus area.

23. Method according to claim 22, further comprising
controlling radiation characteristics and/or radiation signal pattern of the gravitational signal by controlling the radiation characteristics and/or the radiation signal pattern of the electromagnetic radiation of the EM source assembly.

24. Method according to claim 23, wherein the radiation characteristics of the electromagnetic radiation include

- a frequency;
- an amplitude;
- an intensity;
- an energy;
and the radiation signal pattern of the electromagnetic radiation include provision of the electromagnetic radiation
- constantly;
- in a reoccurring manner;
- repeatedly;
- pulsed;
- periodic or quasi-periodic;
- gradually increasing or decreasing;
- divided by an arbitrary time series of values.

25. Method for influencing at least one of a rate of a chemical reaction and/or a biological process and/or a phase transition process, the method comprising
providing gravitational radiation in the form of gravitational waves with a generator device assembly, in a first focus area,
detecting the gravitational radiation with a feedback sensor assembly arranged at least partially within the first focus area to provide at least one feedback signal,
controlling the provision of gravitational radiation of the generator device assembly in dependence of the at least one feedback signal to controllably influence at least one of the rate of the chemical reaction and/or the biological process and/or the phase transition process.

**Fig. 1**

EP 3 859 406 A1

Fig. 2

Fig. 2A

Fig. 2B

Fig. 2C

EP 3 859 406 A1

Fig. 2D

**Fig. 2E**

EP 3 859 406 A1

EP 3 859 406 A1

306E

306B

302B

306

306A

302

100

306D 304A 306B

302C

306C

302A

306F

**Fig. 3**

Fig. 4

100A

102B

402
412
406
402A 402B 402C
412A 412B 412C
404A 404B
406A 406B 406C 406D 406E 406F 406G 406H

**Fig. 5**

EP 3 859 406 A1

**Fig. 6**

providing 702 electromagnetic radiation with a EM source assembly

↓

guiding 704 the electromagnetic radiation with a guiding device to a magnetic field

↓

providing 706 a focus area in which a gravitational signal is outputted

↓

arranging 708 the probe including the at least one chemical reaction, the at least one biological process and/or the at least one phase transition process at least partially within the focus area

↓

controlling 710 radiation characteristics and/or radiation signal pattern of the gravitational signal by controlling 712 the radiation characteristics and/or the radiation signal pattern of the electromagnetic radiation of the EM source assembly

700

**Fig. 7**

800

providing 802 gravitational radiation in the form of gravitational waves with a generator device assembly, in a first focus area

↓

detecting 804 the gravitational radiation with a feedback sensor assembly arranged at least partially within the first focus area to provide at least one feedback signal

↓

controlling 806 the provision of gravitational radiation of the generator device assembly in dependence of the at least one feedback signal to controllably influence the rate of the at least one chemical reaction and/or the biological process and/or the phase transsition process

Fig. 8

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

Application Number

EP 20 20 9601

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GARY V. STEPHENSON: "Analysis of the Demonstration of the Gertsenshtein Effect", AIP CONFERENCE PROCEEDINGS, vol. 746, 1 January 2005 (2005-01-01), pages 1264-1270, XP055485580, NEW YORK, US ISSN: 0094-243X, DOI: 10.1063/1.1867254 * abstract * * figures 1-5 * * page 1264 - page 1269 * | 1-6,8,9, 22-24 | INV. G01V7/04 G01V7/00 G01V7/02 |

-----

-/--

TECHNICAL FIELDS
SEARCHED          (IPC)

G01V
C09K
G01T

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 25 June 2021 | Meyer, Matthias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

Europäisches
Patentamt

European
Patent Office

Office européen
des brevets

**PARTIAL EUROPEAN SEARCH REPORT**

Application Number

EP 20 20 9601

| | **DOCUMENTS CONSIDERED TO BE RELEVANT** | | | CLASSIFICATION OF THE APPLICATION (IPC) |
|---|---|---|---|---|
| Category | Citation of document with indication, where appropriate, of relevant passages | Relevant to claim | | |
| X | Andre Füzfa: "On a Collinear System for the Emission and Reception of Standing Gravitational Waves", ArXiv.org, 20 February 2017 (2017-02-20), pages 1-5, XP055488592, DOI: 10.1007/s00707-016-1604-7 Retrieved from the Internet: URL:https://arxiv.org/abs/1702.06052v1 [retrieved on 2018-06-28] * abstract * * figures 1,2 * * pages 1-4 * | 1-6,8,9, 22-24 | | |
| X | A Füzfa: "Electromagnetic Gravitational Waves Antennas for Directional Emission and Reception", , 10 January 2018 (2018-01-10), XP055485669, Retrieved from the Internet: URL:https://arxiv.org/pdf/1702.06052.pdf [retrieved on 2018-06-19] * abstract * * figures 1,4,13-15 * * pages 1-14 * | 1-6,8,9, 22 | TECHNICAL FIELDS SEARCHED (IPC) | |

EPO FORM 1503 03.82 (P04C10)

Europäisches
Patentamt

European
Patent Office

Office européen
des brevets

**INCOMPLETE SEARCH**
**SHEET C**

Application Number

EP 20 20 9601

Claim(s) searched incompletely:
    1-6, 8, 9, 22-24

Claim(s) not searched:
    7, 10-21, 25

Reason for the limitation of the search:

In his reply to the invitation under Rule 62a(1) and Rule 63(1) EPC as filed in electronic form on 18-06-2021 the applicant has indicated that claims 7, 10-21 and 25 are not to be searched. The applicant has further indicated that the claims 1-6, 8, 9, 22-24 are to be searched in the form specified under points I.1-I.6, I.8, I.9 and I.11 of the reply as filed in electronic form on 18-06-2021.
Notwithstanding the remaining Article 76(1) EPC deficiencies as mentioned under point 2, a meaningful search based on the subject-matter identified in the applicant's reply under points I.1-I.6, I.8, I.9 and I.11 is deemed possible by the search division, and a search has been conducted on that subject-matter, accordingly.